# EUROPEAN PATENT APPLICATION

(11) **EP 4 660 859 A1**
(43) Date of publication of application: **10.12.2025**
(21) Application number: 24822279.6
(22) Date of filing: 29.02.2024
(51) Int. Cl.: G06F 21/62

(54) **DATA PROCESSING METHOD, ELECTRONIC DEVICE, AND READABLE MEDIUM**

(30) Priority: 16.06.2023 CN 202310725353
(71) Applicant: Huawei Technologies Co., Ltd., Shenzhen, Guangdong 518129 (CN)
(72) Inventor: CHEN, Kai, Shenzhen, Guangdong 518129 (CN)
(74) Representative: Maiwald GmbH
(86) International application number: PCT/CN2024/079364
(87) International publication number: WO 2024/255321

(57) **Abstract**

This application relates to the field of information security technologies, and discloses a data processing method, an electronic device, and a readable medium. The data processing method in this application includes: detecting a copy operation on first data of a first application, and storing the first data; detecting a paste request of a second application for the first data; and in response to that the second application being an application that is authorized by a user or is a target pasting application, sending the stored first data to the second application. The foregoing solution avoids a problem that copied data is leaked because an application that is not authorized by the user or an application that does not detect a paste operation initiated by the user obtains the copied data.

## Description

This application claims priority to Chinese Patent Application No. 202310725353.7, filed with the China National Intellectual Property Administration June 16, 2023 and entitled "DATA PROCESSING METHOD, ELECTRONIC DEVICE, AND READABLE MEDIUM", which is incorporated herein by reference in its entirety.

### TECHNICAL FIELD

This application relates to the field of information security technologies, and in particular, to a data processing method, an electronic device, and a readable medium.

### BACKGROUND

A clipboard is a common tool in a smart terminal like a mobile phone or a tablet computer, and is used to transfer and share information between documents or between applications, for example, transfer data copied by a user between the documents or between the applications.

In a process of using the clipboard by the user, there is a problem of leakage of copied content. For example, the user copies a text in an application A, and then pastes the copied text in an application B. When the user starts an application C, the application C automatically reads the copied text. However, the application C is not a target application to which the user wants to paste the copied content, and a behavior of reading the copied content by the application C causes leakage of user information. In addition, if the copied content includes personal information of the user, and the application C improperly uses it, this could disrupt the user's daily life.

### SUMMARY

To resolve a problem of leakage of copied content, embodiments of this application provide a data processing method, an electronic device, and a readable medium.

According to a first aspect, an embodiment of this application provides a data processing method, applied to an electronic device, where the data processing method includes: detecting a copy operation on first data of a first application, and storing the first data; detecting a paste request of a second application for the first data; and in response to that the second application meeting a first condition, sending the stored first data to the second application, where the first condition includes that the second application is an application pre-authorized by a user.

It may be understood that the first application may be a copying application or a copying source application in this embodiment of this application, and the second application may be a pasting application in this embodiment of this application. The copy operation may be a copy operation of selecting, by the user on a touchscreen of the electronic device, content to be copied, a copy operation initiated through a voice, a copy operation initiated through a cursor (for example, a mouse), a copy operation initiated through a gesture, a copy operation controlled through a button, or the like. The paste request may be a paste request initiated by the second application when the second application detects a paste operation of the user, or may be a paste request initiated by the second application. The paste operation may be a paste operation of selecting, by the user on a touchscreen of the electronic device, content to be pasted, a paste operation initiated through a voice, a paste operation initiated through a cursor (for example, a mouse), a paste operation initiated through a gesture, a paste operation controlled through a button, or the like.

It may be understood that the second application may be a target pasting application, namely, an application that is authorized by the user to access the copied content, or an application that detects a paste operation performed by the user; or may be a non-target pasting application, namely, an application that is not authorized by the user, does not detect a paste operation performed by the user, but requests to access the copied content.

In this embodiment of this application, only the target pasting application that detects the paste operation initiated by the user or the application that is authorized by the user can obtain the first data, thereby avoiding a problem that the first data is leaked because the application that is not authorized by the user obtains the first data.

In a possible implementation, the method further includes: in response to that the second application not meeting the first condition, skipping sending the stored first data to the second application, where the first condition includes that the second application is an application corresponding to a paste operation of the user.

This embodiment of this application can avoid a problem that the first data is leaked because the application that is not authorized by the user or the application that does not detect the paste operation initiated by the users obtains the first data.

In a possible implementation, the method further includes: in response to that the second application not meeting the first condition and it is determined that the first data includes private information, skipping sending the stored first data to the second application.

It may be understood that the private information may include personal information of the user, for example, information such as an identity card number, a bank card number, a bank card password, and a salary of the user.

This embodiment of this application can avoid a problem that the personal information of the user is leaked because the application that is not authorized by the user or the application that does not detect the paste operation initiated by the users obtains the personal information of the user.

In a possible implementation, the method further includes: in response to that the second application not meeting the first condition and the first data does not include private information, sending the stored first data to the second application.

In some embodiments, when the paste request is received, if the first data does not include the private information, the first data is returned regardless of whether the second application meets the first condition. This ensures user personal information security and application smoothness.

In a possible implementation, storing the first data includes: in response to that it is determined that the first data includes private information, generating an anonymized identifier of the private information in the first data; and storing the first data in association with the anonymized identifier of the first data.

For example, if it is determined that the first data includes an identity card number, for example, Bxxxxxxxxxxxxxxxxx, or a field of the first data includes an identity card number, for example, Bxxxxxxxxxxxxxxxxx, an anonymized identifier "identity card number" is generated, and the first data is stored in association with the "identity card number", so that the identity card number of the user is sent to the second application in a timely manner when a request for pasting the identity card number of the user is received.

In a possible implementation, generating the anonymized identifier of the private information in the first data includes: in response to that the first data including N1 types of private information, generating N2 anonymized identifiers, where N2 is greater than or equal to N1, where if N1 is equal to 1, the N2 anonymized identifiers include anonymized identifiers corresponding to the N1 types of private information; or if N1 is greater than 1, the N2 anonymized identifiers include anonymized identifiers corresponding to the N1 types of private information and a general anonymized identifier of the first data.

For example, if it is identified that the first data includes only the identity card number "Bxxxxxxxxxxxxxxxxx" or the field of the first data includes only the identity card number "Bxxxxxxxxxxxxxxxxx", the anonymized identifier "identity card number" is generated.

For example, if it is identified that the first data includes the identity card number "Bxxxxxxxxxxxxxxxxx" and a bank card number "Cxxxxxxxxxxxxxxx", anonymized identifiers "identity card number" and "bank card number" are generated, and a general anonymized identifier "PII" is generated for the first data.

In a possible implementation, storing the first data in association with the anonymized identifier of the first data includes: if N2 is equal to 1, storing the first data in association with an anonymized identifier of the first data; or if N2 is greater than 1, storing each type of private information in the first data in association with a corresponding anonymized identifier, and storing the first data in association with a general anonymized identifier.

For example, the first data includes only an identity card number "Bxxxxxxxxxxxxxxxxx", and an anonymized identifier includes only the identity card number. In this case, the first data is stored in association with the identity card number.

For example, the first data includes an identity card number "Bxxxxxxxxxxxxxxxxx" and a bank card number "Cxxxxxxxxxxxxxxx", anonymized identifiers include the "identity card number" and the "bank card number", and a general anonymized identifier includes "PII". In this case, the "Bxxxxxxxxxxxxxxxxx" is stored in association with the "identity card number", the "Cxxxxxxxxxxxxxxx" is stored in association with the "bank card number", and the first data is stored in association with the "PII".

In a possible implementation, the method includes: displaying an anonymized identifier of the first data; and detecting a selection operation performed by the user on the anonymized identifier of the first data; and sending the stored first data to the second application includes: sending, to the second application, data that corresponds to the anonymized identifier selected through the selection operation and that is in the stored first data.

For example, if it is detected that the user taps an identity card number option on an interface of the electronic device, information corresponding to the stored identity card number is sent to the second application.

In a possible implementation, the method includes: in response to that the first data meeting a second condition, deleting the first data and associated storage information of the first data.

In this embodiment of this application, the first data and the associated storage information of the first data are deleted, so that memory space occupied by the first data can be reduced, and the first data is not tracked.

For example, when the first data meets the second condition, the "Bxxxxxxxxxxxxxxxxx" and the "identity card number" are deleted.

In a possible implementation, the second condition includes at least one of the following: a delete operation performed by the user on the first data is detected; or storage time of the first data meets a time threshold.

In a possible implementation, the electronic device includes a third application, and the third application includes a writing module, a storage module, a detection module, and a reading module, where the writing module sends the first data to the storage module after the copy operation on the first data of the first application is detected; the storage module is configured to store the first data; the detection module is configured to: in response to the paste request, determine whether the second application meets the first condition, obtain the first data from the storage module when the second application meets the first condition, and send the first data to the reading module; and the reading module is configured to send the first data to the second application.

It may be understood that the third application may be a clipboard in this embodiment of this application.

In this embodiment of this application, the detection module in the third application determines a type of the second application that sends the paste request, so that only the target pasting application that detects the paste operation initiated by the user or the application that is authorized by the user can obtain the first data, thereby avoiding a problem that the first data is leaked because the application that is not authorized by the user or the application that does not detect the paste operation initiated by the user obtains the first data.

According to a second aspect, an embodiment of this application provides an electronic device, including: a memory, configured to store instructions executed by one or more processors of the electronic device; and a processor, which is one of the one or more processors of the electronic device and is configured to implement any data processing method according to the first aspect and the possible implementations of the first aspect.

According to a third aspect, an embodiment of this application provides a readable medium. The readable medium stores instructions. When the instructions are executed on an electronic device, the electronic device is enabled to implement any data processing method according to the first aspect and the possible implementations of the first aspect.

### BRIEF DESCRIPTION OF DRAWINGS

FIG. 1 is a diagram of a clipboard framework according to an embodiment of this application;
FIG. 2 is a diagram of a data identifier according to an embodiment of this application;
FIG. 3A and FIG. 3B are a diagram of system modules of a clipboard according to an embodiment of this application;
FIG. 4 is an interaction diagram of a data processing method according to an embodiment of this application;
FIG. 5a to FIG. 5c are a diagram of a mobile phone interface change generated when a user initiates a copy operation in a memo interface 101 of a mobile phone but does not initiate a paste operation in a browser application interface 102 according to an embodiment of this application;
FIG. 6a and FIG. 6b are a diagram of a mobile phone interface change generated when a user initiates a copy operation in a memo interface 101 of a mobile phone but does not initiate a paste operation in a browser application interface 102 when a security protection mode is enabled for a clipboard according to an embodiment of this application;
FIG. 7 is a diagram of a display interface in which a browser interface 103 displays an option 404 indicating whether to delete immediately according to an embodiment of this application;
FIG. 8 is a diagram of a display interface for pasting copied data according to an embodiment of this application;
FIG. 9a is a diagram of a display interface for pasting an identity card number according to an embodiment of this application;
FIG. 9b is a diagram of a display interface for pasting an address according to an embodiment of this application;
FIG. 10A and FIG. 10B are a diagram of system modules of a clipboard having a security protection mode according to an embodiment of this application;
FIG. 11 is a schematic flowchart of a data processing method in which a security protection mode is enabled for a clipboard according to an embodiment of this application;
FIG. 12 is a schematic flowchart of a data processing method in which a security protection mode is enabled for a clipboard and copied content does not include private information according to an embodiment of this application;
FIG. 13A and FIG. 13B are an interaction diagram of a data processing method for a clipboard having a security protection mode according to an embodiment of this application;
FIG. 14A and FIG. 14B are an interaction diagram of a data processing method in two states in which a security protection mode is enabled and a security protection mode is disabled for the clipboard according to an embodiment of this application;
FIG. 15A and FIG. 15B are an interaction diagram of a data processing method in which a security protection mode is enabled for a clipboard according to an embodiment of this application;
FIG. 16A and FIG. 16B are an interaction diagram of a data processing method in which copied content is stored in association with an anonymized identifier according to an embodiment of this application;
FIG. 17A to FIG. 17C are an interaction diagram of a data processing method in which copied content and a corresponding anonymized identifier that are stored in a clipboard are immediately deleted according to an embodiment of this application;
FIG. 18A and FIG. 18B are an interaction diagram of a data processing method in which copied content is selectively pasted based on a plurality of anonymized identifiers according to an embodiment of this application;
FIG. 19A and FIG. 19B are an interaction diagram of a data processing method in which corresponding copied content is selected and pasted in whole or segments based on a plurality of anonymized identifiers according to an embodiment of this application; and
FIG. 20 is a diagram of a structure of an electronic device 10 according to an embodiment of this application.

### DESCRIPTION OF EMBODIMENTS

Illustrative embodiments of this application include but are not limited to a data processing method, an electronic device, and a readable medium.

It may be understood that the technical solution of this application is applicable to an electronic device that can provide a running environment of clipboard application software, for example, including but not limited to a mobile phone, a smartwatch, a tablet computer, a vehicle-mounted device, a notebook computer, an ultra-mobile personal computer (ultra-mobile personal computer, UMPC), a netbook, or a personal digital assistant (personal digital assistant, PDA). A specific type of the electronic device is not limited in embodiments of the present invention. A clipboard may be application software that can provide copying and pasting functions, such as a system clipboard or an input method clipboard of the electronic device.

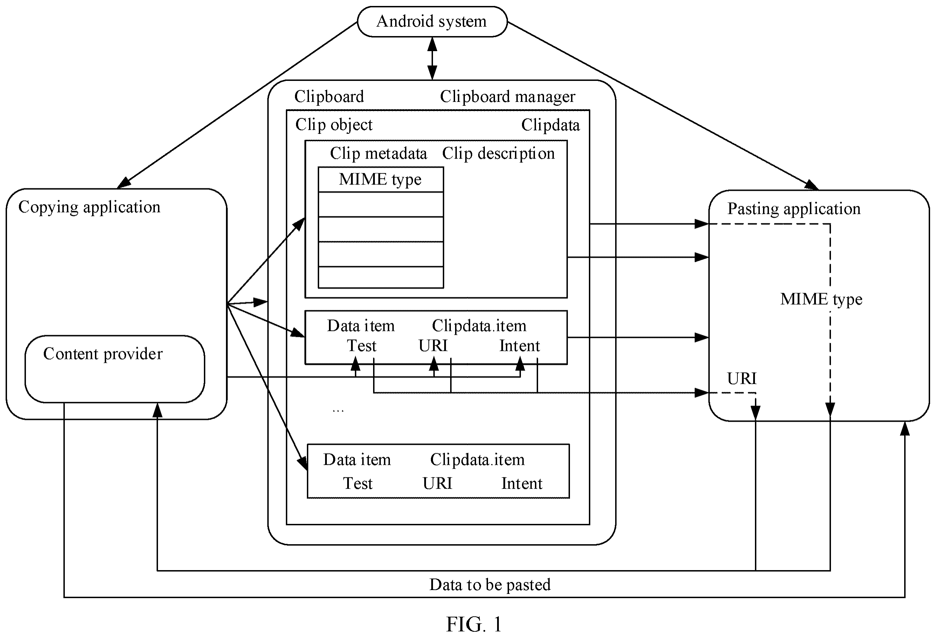

The following describes a clipboard framework in a system framework of the electronic device. As shown in FIG. 1, when the electronic device uses an Android system, the clipboard framework includes a copying application (copying application), a clipboard (clipboard), and a pasting application (pasting application). The following separately describes the copying application, the clipboard, and the pasting application.

The copying application is used to write copied data into the clipboard. The copying application includes a content provider (content provider). The content provider is an interface for sharing data between applications, and is used to parse complex data. The copying application may be any application that can use the clipboard in application software of the electronic device, for example, a memo application, a chat application, a conference application, a shopping application, or a music application.

The clipboard includes a clipboard manager (clipboard manager). The clipboard manager is configured to perform a clipboard operation, obtain copied data, and write the copied data into the pasting application. The clipboard manager includes a clip description (clip description) and clipdata.item (clipdata.item).

It may be understood that, corresponding to a process in which the copying application copies data, the copying application needs to store the copied data, namely, a clipdata (clipdata) object, into a clip (clip) object of the clipboard manager. Clipdata includes one or more clipdata.item (clipdata.item) objects and one clip description (clip description) object. Corresponding to a process in which the pasting application pastes the copied data, the pasting application needs to obtain an available multipurpose internet mail extensions (multipurpose internet mail extensions, MIME) type of the pasting application from the clip description, and obtain the copied data from the clipdata.item (clipdata.item) or the content provider referenced by the clipdata.item.

The clip description includes clip metadata (clip metadata), and the clip metadata may be a MIME type array. The clipdata.item is a data item (data item). The clipdata.item includes test (test) data, uniform resource identifier (uniform resource identifier, URI) data, and intent (intent) data. The test data is a text string; the URI data is data copied by the clipboard from the content provider; and the intent data is data that supports a copying application shortcut.

The pasting application is used to obtain the copied data from the clipboard. A memory area of the pasting application can record the MIME type and URI of the copied data. The pasting application may be any application that can use the clipboard in the application software of the electronic device, for example, the memo application, the chat application, the conference application, the shopping application, or the music application.

For the clipboard framework shown in FIG. 1, simple text data may be directly stored in a stack, that is, stored in the clipboard; and complex data needs to be stored jointly in the stack and a heap, where an address is stored in the stack, and the address points to data in a corresponding heap memory, that is, is stored as a reference (for example, the URI data), so that the content provider searches for data that needs to be pasted based on the reference, and parses the complex data. A data structure of the simple text data is simple, for example, including a text string and a text. A data structure of the complex data is complex, for example, an array, binary stream data, or an application resource.

For the clipboard framework shown in FIG. 1, a method for copying data to a clipboard by a copying application may include the following process:
Obtain the system clipboard (clipboard).

It may be understood that the copying application first obtains a handle of a clipboard manager object, to create a clip object.

Copy data to a new clip (clip) object.

It may be understood that the copying application copies the copied data, namely, clipdata, to the created clip object.

(3) Place the new clip (clip) object to the clipboard (clipboard).

It may be understood that the copying application stores the created clip object into the clipboard.

(4) Add personal content to the clipboard (set to allow copying of the personal content).

It may be understood that, the copying application may set sensitive data such as the personal content to be accessible, store accessible information of the personal content into the clip description, and then store the clip description into the clipboard.

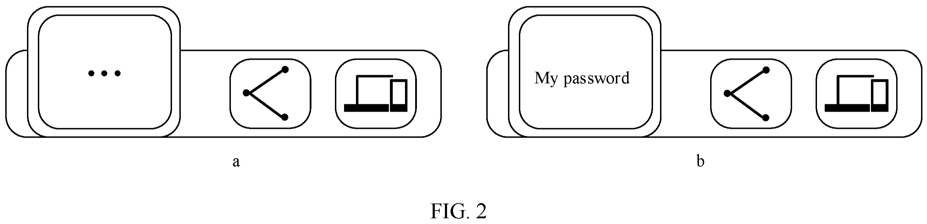

Copied data that does not include the personal content may be identified by an identifier a in FIG. 2. Copied data that includes the personal content, for example, copied data including "my password (my password)", may be identified by an identifier b in FIG. 2.

For the clipboard framework shown in FIG. 1, a method for pasting copied data from a clipboard by a pasting application may include the following process:

(5) Obtain the system clipboard (clipboard).

It may be understood that the pasting application may obtain the clipboard manager object by using corresponding code.

(6) Copy data (usually, obtain only the latest copied data) from the clipboard (clipboard).

It may be understood that the pasting application may obtain the clipdata.item, to obtain the copied data through the clipdata.item.

(7) Obtain the clipboard as a text.

It may be understood that the pasting application may paste the obtained copied data as the text.

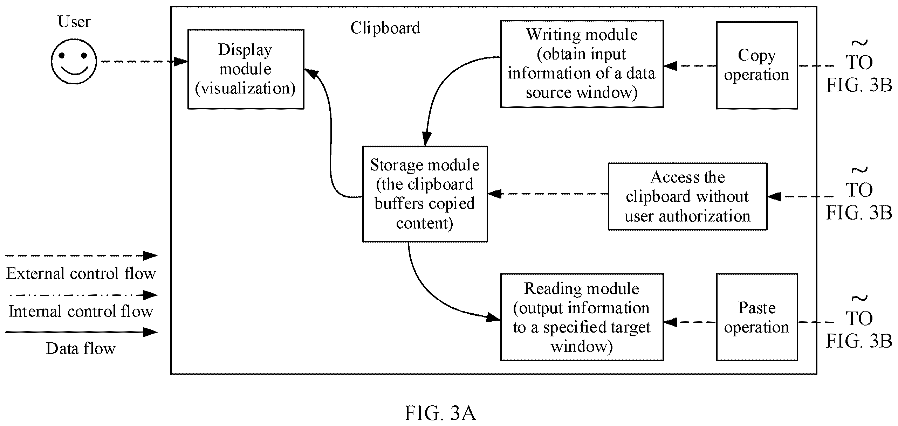

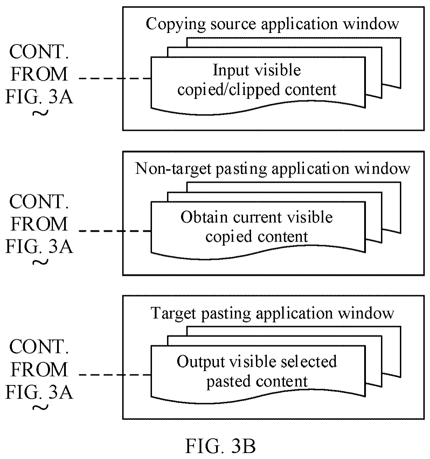

The following describes system modules of the clipboard (namely, the clipboard shown in FIG. 1) with reference to FIG. 3A and FIG. 3B.

As shown in FIG. 3A and FIG. 3B, the clipboard includes a writing module, a storage module, a reading module, and a display module. The following first describes functions of the writing module, the storage module, the reading module, and the display module.

The writing module is configured to obtain copied or clipped content copied by the user in a copying source application window (for example, an application window of the chat application) of a copying source application, that is, obtain input information of a data source window.

The storage module is configured to store the input information of the data source window sent by the writing module, and send the input information of the data source window to the display module or the reading module.

The reading module is configured to: when it is detected that the user initiates a paste operation in a target pasting application window (for example, an application window of the shopping application) of a target pasting application, output, to the target pasting application window corresponding to the paste operation, information corresponding to the paste operation.

The display module is configured to receive an operation performed by the user on the clipboard, and display copied or cut content stored in the storage module.

The following describes, based on the foregoing modules, a processing process in which the clipboard detects the copy operation or the paste operation.

As shown in FIG. 3A and FIG. 3B, it may be understood that when the user initiates the copy operation in the copying source application window of the copying source application of the electronic device, the writing module of the clipboard obtains copied or cut content entered by the user in the copying source application window, and stores the copied or cut content in the storage module of the clipboard. When receiving the paste operation initiated by the target pasting application window of the target pasting application, the reading module outputs, to the target pasting application window, the copied or cut content corresponding to the paste operation. When the storage module receives a paste request that is sent by a non-target pasting application window of a non-target pasting application and that is not authorized by the user to access the clipboard, the storage module outputs copied or cut content corresponding to the paste operation. In other words, even if no user authorizes or no user initiates a paste operation, the non-target pasting application can still obtain, through the storage module, the copied or cut content stored in the clipboard.

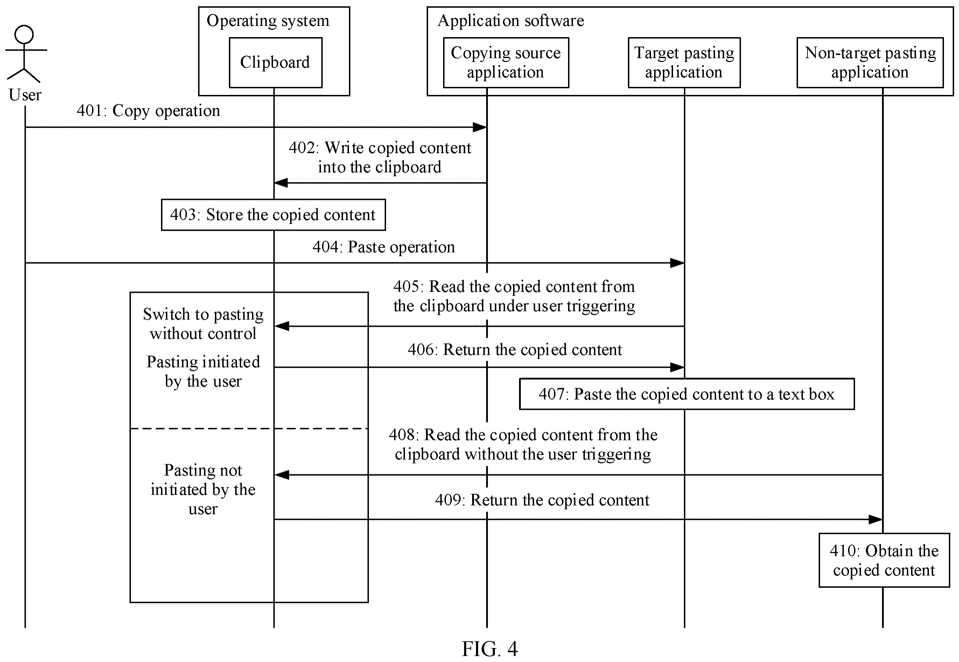

The following uses FIG. 4 as an example to describe in detail a method for copying data from a copying source application (namely, a copying application) of an electronic device to a target pasting application (namely, a pasting application) by a user. The electronic device includes an operating system and an application layer. The operating system includes a clipboard, and the application layer includes a copying source application, a target pasting application, and a non-target pasting application. The copying source application is an application (for example, a chat application) that detects a copy operation initiated by the user; the target pasting application is an application (for example, a shopping application) that detects a paste operation initiated by the user; and the non-target pasting application is an application that is not started or not authorized by the user, or an application that does not detect the paste operation initiated by the user. In some embodiments, the application layer may be integrated into the operating system, that is, the operating system also includes the application layer. This is not limited herein.

401: The user initiates the copy operation to the copying source application.

It may be understood that the copying source application may be any application that can use the clipboard in application software, for example, a memo application, the chat application, a conference application, the shopping application, or a music application.

In embodiments of this application, the copy operation initiated by the user may be a copy operation selected by the user on a touchscreen of the electronic device, a copy operation initiated through a voice, a copy operation initiated through a cursor (for example, a mouse), a copy operation initiated through a gesture, a copy operation controlled through a button, or the like.

402: The copying source application writes copied content into the clipboard.

For example, the copying source application is the memo application. The memo application writes the copied content (for example, an identity card number "Bxxxxxxxxxxxxxxxxx") into the clipboard.

403: The clipboard stores the copied content.

404: The user initiates the paste operation to the target pasting application.

In embodiments of this application, the paste operation initiated by the user may be a paste operation of selecting, by the user on a touchscreen of the electronic device, content to be pasted, a paste operation initiated through a voice, a paste operation initiated through a cursor (for example, a mouse), a paste operation initiated through a gesture, a paste operation controlled through a button, or the like.

For example, the user initiates the paste operation in a search bar of a browser application, for example, touches and holds the search bar, to paste the copied content in the clipboard.

The following describes, by using steps 405 to 410, a method for pasting the copied content to the clipboard. Based on steps 405 to 407, the following first describes a pasting method used when the user initiates the paste operation on the target pasting application.

405: The target pasting application reads the copied content from the clipboard under user triggering.

It may be understood that the user triggering may be a paste operation of the user. The paste operation of the user detected by the target pasting application may be the paste operation of selecting, by the user on the touchscreen of the electronic device, the content to be pasted, the paste operation initiated through the voice, the paste operation initiated through the cursor (for example, the mouse), the paste operation initiated through the gesture, the paste operation controlled through the button, or the like. When detecting the user triggering, the target pasting application may send a request to the clipboard to read the copied content.

406: The clipboard returns the copied content to the target pasting application.

407: The target pasting application pastes the copied content to a text box.

Based on steps 408 to 410, the following describes a pasting method in which the non-target pasting application initiates the paste operation without the user triggering.

408: The non-target pasting application reads the copied content from the clipboard without the user triggering.

409: The clipboard returns the copied content to the non-target pasting application.

410: The non-target pasting application obtains the copied content.

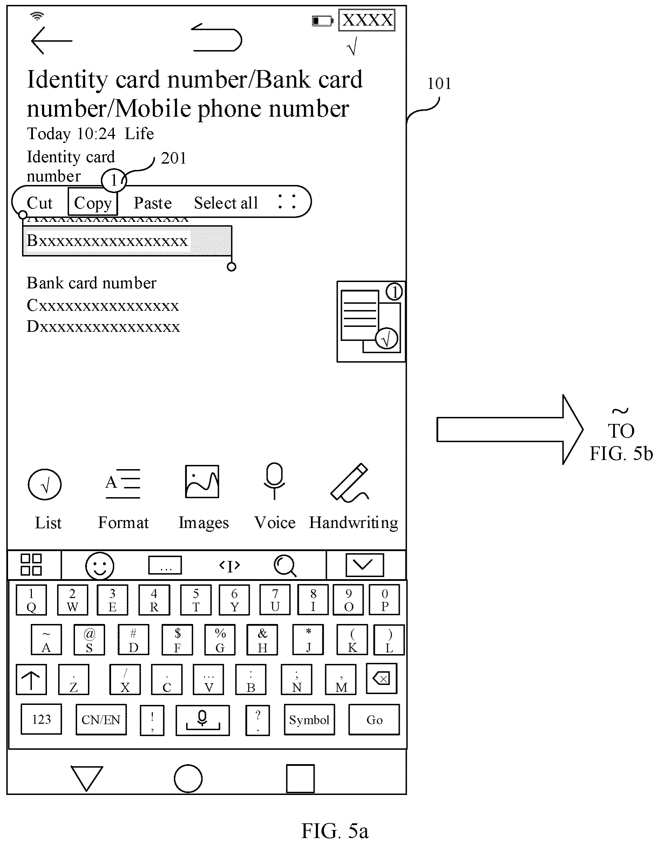

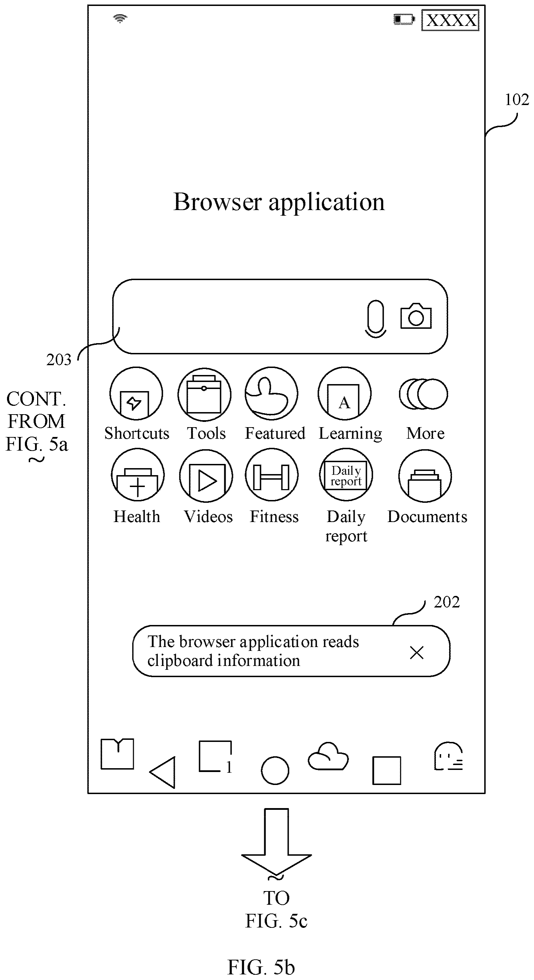

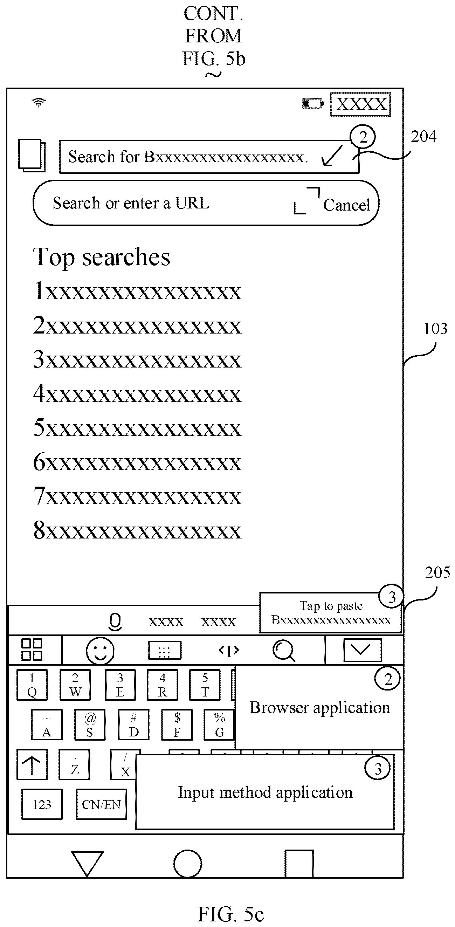

For example, as shown in an interface a in FIG. 5a to FIG. 5c, after the user selects content of an identity card number "Bxxxxxxxxxxxxxxxxx" in a memo interface 101 of a mobile phone and taps a copy option 201, the clipboard obtains and stores the "Bxxxxxxxxxxxxxxxxx". As shown in an interface b in FIG. 5a to FIG. 5c, when the user starts a browser application and does not perform any user operation (including a paste operation), a pop-up window is displayed in a browser application interface 102 of the mobile phone to inform: The browser application reads clipboard information 202. After the user taps a text box 203 in the browser application interface 102, as shown in an interface c in FIG. 5a to FIG. 5c, a browser application interface 103 is displayed. The browser application interface 103 displays, through a control 204 of searching for Bxxxxxxxxxxxxxxxxx, the "Bxxxxxxxxxxxxxxxxx" read by the browser application from the clipboard; and displays, through a control 205 of tapping to paste the Bxxxxxxxxxxxxxxxxx, the "Bxxxxxxxxxxxxxxxxx" stored in the clipboard. The user may paste the Bxxxxxxxxxxxxxxxxx by tapping the control 204 of searching for Bxxxxxxxxxxxxxxxxx or the control 205 of tapping and pasting the Bxxxxxxxxxxxxxxxxx. However, the browser application is not a target pasting application for the user to paste the Bxxxxxxxxxxxxxxxxx.

It can be found from the foregoing analysis that the copied content entered by the user into the clipboard can be accessed by all applications randomly, and a risk of data abuse is high. In addition, because the clipboard records a pure local input behavior of the user, private information of the user, for example, personal information of the user, appears frequently, and an information leakage risk is high.

To resolve a problem of leakage of copied content, embodiments of this application provide a data processing method. The data processing method includes: A user may customize an application that allows access to copied data (or referred to as copied content) stored in a clipboard, for example, authorize, in a setting application of a system, an application that can access the copied data stored in the clipboard. When the clipboard obtains a paste request, it is determined whether a pasting application sending the paste request is an application authorized by the user or a target pasting application corresponding to a paste operation performed by the user. If it is determined that the pasting application is neither the application authorized by the user nor the target pasting application, the copied data corresponding to the paste request is not returned to the pasting application. If it is determined that the pasting application is the application authorized by the user or the target pasting application, the copied data corresponding to the paste request is returned to the pasting application.

The following describes a scenario in which a browser application requests to read the clipboard by using an example in which the browser application (the pasting application) is neither an application authorized by the user nor a target pasting application.

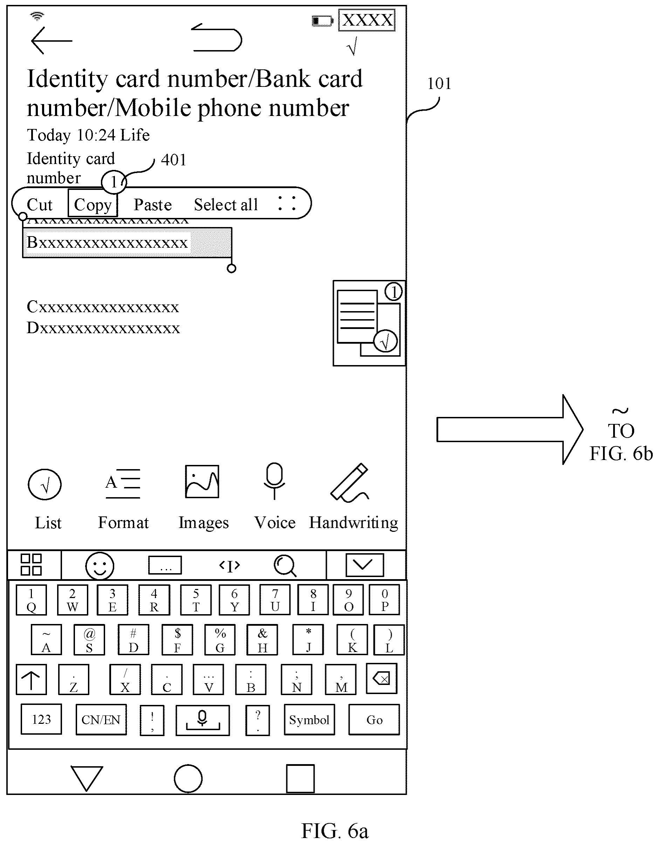

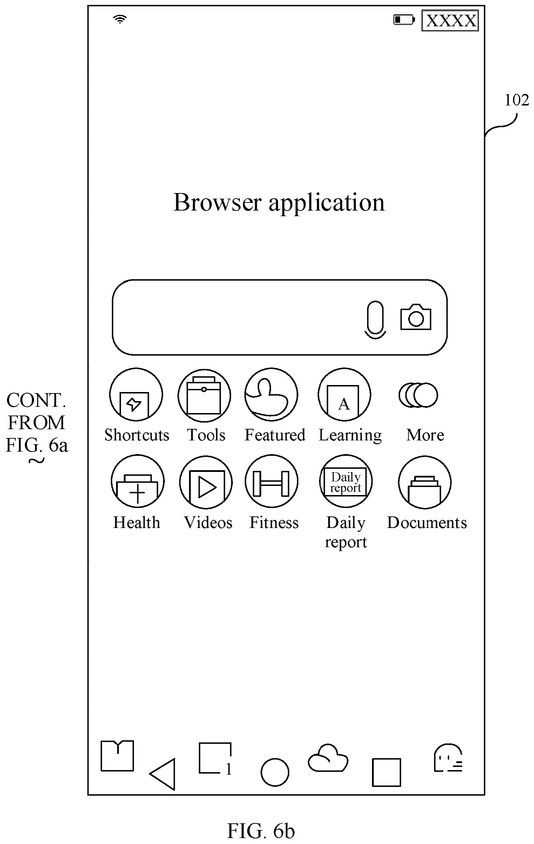

For example, as shown in an interface a in FIG. 6a and FIG. 6b, after the user selects content of an identity card number "Bxxxxxxxxxxxxxxxxx" in a memo interface 101 of a mobile phone and taps a copy option 401, the clipboard stores the "Bxxxxxxxxxxxxxxxxx". As shown in an interface b in FIG. 6a and FIG. 6b, after the user enters a browser application interface 102, because the browser application cannot read the Bxxxxxxxxxxxxxxxxx stored in the clipboard, the browser application reads the clipboard information 202 shown in the interface b in FIG. 5a to FIG. 5c is not displayed.

In this way, only the target pasting application on which the user initiates the paste operation or the application authorized by the user can obtain the copied data, thereby avoiding a problem that the copied data, for example, personal information of the user, is leaked because an application that is not authorized by the user or an application that does not detect the paste operation initiated by the user obtains the copied data.

In some embodiments, whether the copied data stored in the clipboard includes private information may be first determined. If the copied data stored in the clipboard does not include the private information of the user, a type of the pasting application may not be determined, that is, regardless of whether the pasting application is of any type, the copied data corresponding to the paste request is returned. If the copied data stored in the clipboard includes the private information of the user, the copied data corresponding to the paste request is returned to only the pasting application authorized by the user or the target pasting application. Therefore, when the clipboard receives the paste request, the type of the pasting application is further determined only when the copied data stored in the clipboard includes the private information, to avoid determining the type of the pasting application each time the paste request is received. This ensures user personal information security and application smoothness.

For example, when the clipboard obtains the paste request, if it is determined that the latest piece of copied data stored in the clipboard includes the private information (for example, an identity card number), the clipboard determines the type of the pasting application that sends the paste request, and determines, based on the type of the pasting application, whether to send the copied data corresponding to the paste request. If it is determined that the latest piece of copied data stored in the clipboard does not include the private information, the clipboard returns the copied data corresponding to the paste request to the pasting application.

In some embodiments, the type of the pasting application may be first determined, and then whether the copied data stored in the clipboard includes the private information is determined. To be specific, the type of the pasting application is first determined. If it is determined that the pasting application is the application authorized by the user or the target pasting application, the copied data corresponding to the paste request is returned to the pasting application. If it is determined that the pasting application is neither the application authorized by the user nor the target pasting application, it is determined whether the copied data stored in the clipboard includes the private information, and whether to send the copied data corresponding to the paste request is determined based on whether the copied data stored in the clipboard includes the private information.

For example, when the clipboard obtains the paste request, if it is determined that the pasting application is the application authorized by the user or the target pasting application, the clipboard returns the copied data corresponding to the paste request to the pasting application. If it is determined that the pasting application is neither the application authorized by the user nor the target pasting application, the clipboard determines whether the copied data stored in the clipboard includes the private information. If it is determined that the copied data corresponding to the paste request includes the private information of the user, for example, information such as an identity card number or a bank card number of the user, the clipboard does not return the copied data corresponding to the paste request to the pasting application. If it is determined that the copied data corresponding to the paste request does not include the private information of the user, the clipboard returns the copied data corresponding to the paste request to the pasting application.

In some embodiments, after the copied data is pasted into the text box corresponding to the paste request, the user may tap an immediate delete option, to delete the corresponding copied data stored in the clipboard, thereby reducing memory space occupied by the clipboard and preventing historical data from being tracked.

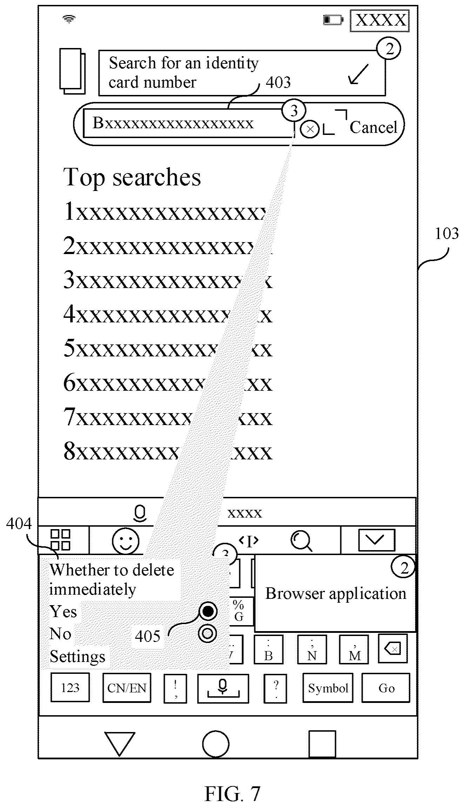

For example, as shown in FIG. 7, after the copied data "Bxxxxxxxxxxxxxxxxx" is pasted into a text box 403, a browser interface 103 displays an option 404 indicating whether to delete immediately. After it is detected that the user taps a Yes option 405, the identity card number "Bxxxxxxxxxxxxxxxxx" stored in the clipboard is deleted.

In some embodiments, when time at which the copied data is pasted into the text box corresponding to the paste request meets a time threshold, the corresponding copied data stored in the clipboard is deleted.

In some embodiments, when time at which the copied data is stored in the clipboard meets a time threshold, the copied data stored in the clipboard is deleted.

In embodiments of this application, when obtaining the copy request, the clipboard obtains the copied data corresponding to the copy request, and identifies the copied data. When it is identified that the copied data includes the private information, for example, the information such as the identity card number or the bank card number of the user is identified, the anonymized identifier corresponding to the private information in the copied data is generated, and the copied data is stored in association with the anonymized identifier. The anonymized identifier may be represented in a form of metadata, a data type, a copy sequence number, an anonymized mask, an identifier, or the like in a single or combined manner.

It may be understood that a quantity of anonymized identifiers of the copied data depends on a quantity of types of private information in the copied data. For example, if it is identified that the copied data includes only one piece of private information, for example, an identity card number of the user, an anonymized identifier "identity card number (ID card)" is generated, and the copied data is stored in association with the "identity card number", so that the identity card number of the user is returned in a timely manner when a request for pasting the identity card number of the user is received.

In some embodiments, when it is identified that the copied data is one or more segments of text, and the copied data includes a plurality of pieces of private information, a corresponding anonymized identifier is generated for each piece of private information in the copied data, and each piece of private information in the copied data is stored in association with the corresponding anonymized identifier.

For example, if it is identified that the copied data includes an identity card number "Bxxxxxxxxxxxxxxxxx" or a field of the copied data includes an identity card number "Bxxxxxxxxxxxxxxxxx", an anonymized identifier "identity card number" is generated. If it is identified that the copied data further includes a bank card number "Cxxxxxxxxxxxxxxx" or a field of the copied data includes a bank card number "Cxxxxxxxxxxxxxxx", an anonymized identifier "bank card number (Bank card)" is generated. The identity card number "Bxxxxxxxxxxxxxxxxx" is stored in association with the "identity card number", and the bank card number "Cxxxxxxxxxxxxxxx" is stored in association with the "bank card number".

In some embodiments, when it is identified that the copied data is one or more segments of text, and the copied data includes a plurality of pieces of private information, a corresponding anonymized identifier may be generated for each piece of private information in the copied data, and a general anonymized identifier may be generated for the copied data. The copied data is stored in association with the general anonymized identifier, and each piece of private information in the copied data is stored in association with the corresponding anonymized identifier.

For example, if it is identified that the copied data includes an identity card number "Bxxxxxxxxxxxxxxxxx" or a field of the copied data includes an identity card number "Bxxxxxxxxxxxxxxxxx", an anonymized identifier "identity card number" is generated; and if it is identified that the copied data further includes a bank card number "Cxxxxxxxxxxxxxxx" or a field of the copied data includes a bank card number "Cxxxxxxxxxxxxxxx", an anonymized identifier "bank card number" is generated, and a general anonymized identifier "PII" is generated for the copied data. The identity card number "Bxxxxxxxxxxxxxxxxx" is stored in association with the "identity card number", the bank card number "Cxxxxxxxxxxxxxxx" is stored in association with the "bank card number", and the copied data is stored in association with the "PII".

In embodiments of this application, when the user initiates a paste request on a pasting application interface of the electronic device, the pasting application interface may further display at least one anonymized identifier of the copied data stored in the clipboard, so that the user can paste the corresponding copied data based on the anonymized identifier.

The following describes a method for returning the copied data corresponding to the paste request to the pasting application by using an example in which the pasting application is the target pasting application, and the copied data stored in the clipboard has one anonymized identifier, for example, the copied data is the identity card number "Bxxxxxxxxxxxxxxxxx", and the anonymized identifier is the "identity card number".

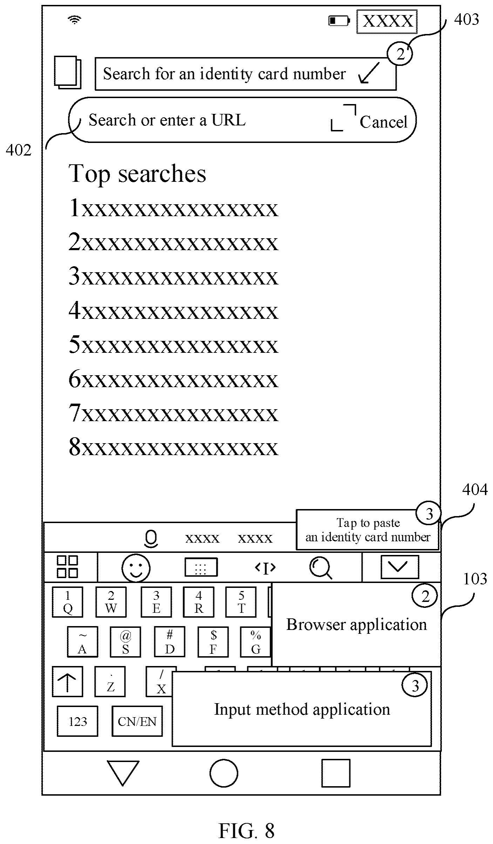

As shown in FIG. 8, when the user initiates a paste operation (for example, touching and holding a text box 402) in the text box 402 of a browser application interface 103, the browser application interface 103 displays an option 403 of searching for an identity card number that is generated by a browser application and an option 404 of tapping to paste the identity card number that is generated by a clipboard. The user may paste the "Bxxxxxxxxxxxxxxxxx" stored in the clipboard into the text box 402 by tapping the option 403 of searching for an identity card number or the option 404 of tapping to paste the identity card number.

The following describes a method for returning the copied data corresponding to the paste request to the pasting application by using an example in which the copied data stored in the clipboard has a plurality of content identifiers and the pasting application is the target pasting application.

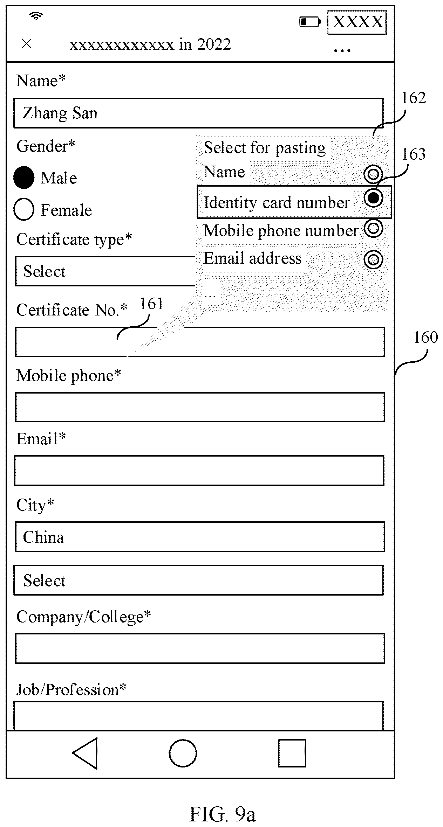

For example, the copied data stored in the clipboard is a segment of text, the copied data includes a name, an identity card number, a mobile phone number, an email address, and the like of the user, and an anonymized identifier corresponding to text content includes the name, the identity card number, the mobile phone number, the email address, and the like. As shown in FIG. 9a, after the user taps a text box 161 corresponding to a certificate number * on an information filling page 160 of a mobile phone, and initiates a paste operation (for example, touching and holding the text box 161), the information filling page 160 of the mobile phone may display an option 162 of selecting for pasting for the user to select content to be pasted. After the user taps an identity card number option 163, the identity card number stored in the clipboard is written into the text box 161 corresponding to the certificate number *.

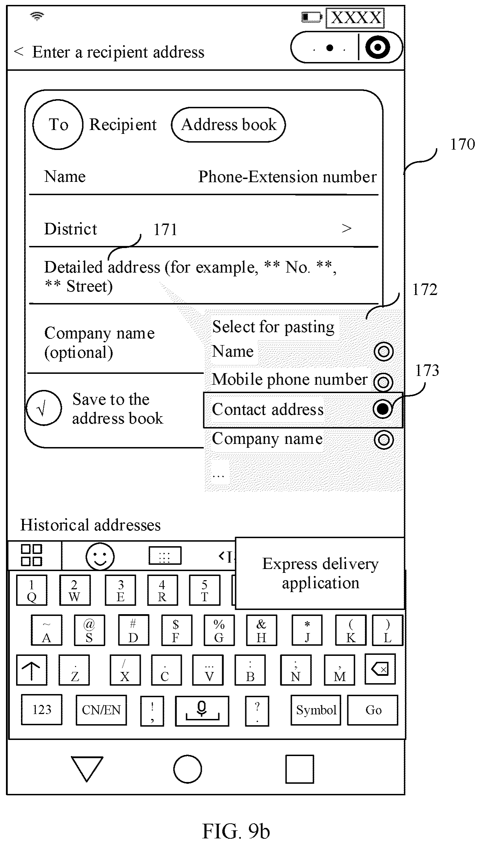

For example, the copied data stored in the clipboard is a segment of text, the copied data includes a name, a mobile phone number, an address, a company name, and the like of the user, and an anonymized identifier corresponding to the text content includes the name, the mobile phone number, the address, the company name, and the like. As shown in FIG. 9b, after the user taps a text box 171 corresponding to a detailed address on an express delivery information filling page 170 of a mobile phone, and initiates a paste operation (for example, touching and holding the text box 171), the express delivery information filling page 170 of the mobile phone may display an option 172 of selecting for pasting. After the user taps an address option 173, the address stored in the clipboard is written into the text box 171 corresponding to the detailed address.

In this way, the user may paste the corresponding copied data to a target location based on an actual requirement, to improve user experience.

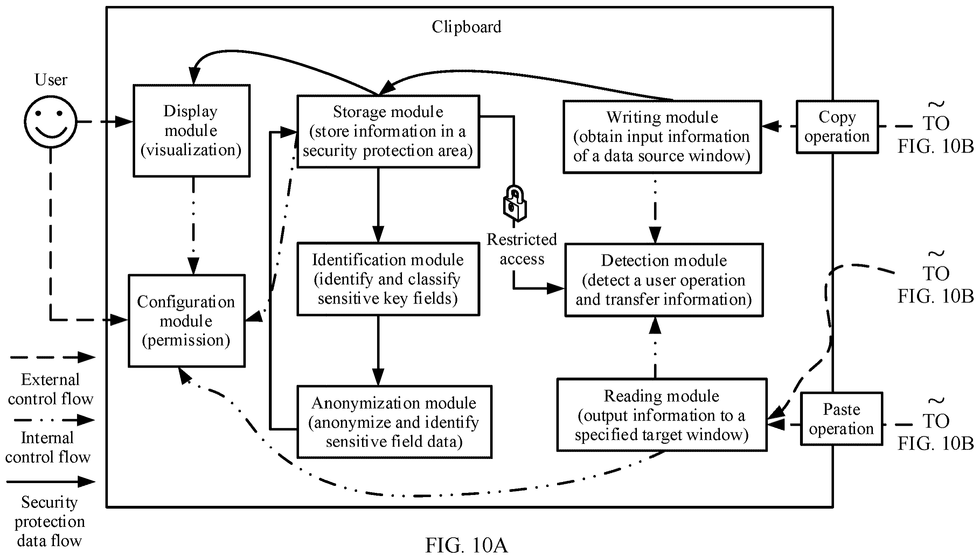

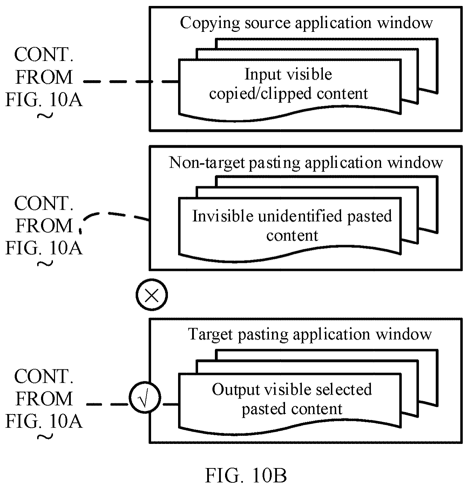

As shown in FIG. 10A and FIG. 10B, FIG. 10A and FIG. 10B are a diagram of an architecture of a clipboard in an electronic device according to an embodiment of this application. A system architecture shown in FIG. 10A and FIG. 10B includes a plurality of functional units. A difference from the system architecture shown in FIG. 3A and FIG. 3B lies in that a configuration module, an identification module, an anonymization module, and a detection module are added. A connection relationship between the modules is shown in FIG. 10A and FIG. 10B. The following describes functions of the new modules.

The configuration module is configured to receive personalized settings of a user, for example, receive a switching instruction of the user, to determine, according to the switching instruction, whether the clipboard runs a security protection mode; receive a trust instruction of the user, to determine, according to the trust instruction, an application that is authorized by the user to access copied content; and receive a timing deletion instruction of the user, to delete, according to the timing deletion instruction, the copied content stored in the clipboard.

The identification module is configured to: identify a sensitive key field of the copied content sent by the storage module, and divide, based on the sensitive key field, the copied content sent by the storage module.

The anonymization module is configured to: anonymize the sensitive key field of the copied content sent by the identification module, generate a corresponding anonymized identifier, and send the anonymized identifier and the copied content to the storage module.

The detection module is configured to: detect whether a paste request is sent by an application authorized by the user or a target pasting application; detect a copying source application of the copied content obtained by the writing module; detect whether the pasting application is a target pasting application; or detect whether the pasting application is a non-target pasting application.

In this embodiment of this application, when the detection module determines that the pasting application is the non-target pasting application, the reading module does not output the copied content. In other words, the copied content cannot be obtained in a non-target pasting application window of the non-target pasting application.

It may be understood that, because the clipboard provided in this embodiment of this application may anonymize the copied content (namely, a data stream), security of the data stream is enhanced. Therefore, the data stream in this embodiment of this application is recorded as a security protection data stream.

It may be understood that, corresponding to the system architecture shown in FIG. 10A and FIG. 10B, when the user initiates the copy operation in the copying source application window of the copying source application of the electronic device, the writing module of the clipboard obtains copied or cut content in the copying source application window of the copying source application, and stores the copied or cut content in the storage module of the clipboard. The storage module sends the obtained copied or cut content to the identification module, to identify a sensitive keyword in the copied or cut content by using the identification module, divide the copied or cut content, and then send the divided copied or cut content to the anonymization module. The anonymization module anonymizes the divided copied or cut content, generates a corresponding anonymized identifier, and then stores the content in association with the corresponding anonymized identifier to the storage module.

When the reading module receives the paste request, if the detection module determines that the pasting application is the target pasting application or the application authorized by the user, the copied content is returned; or if the detection module determines that the pasting application is the non-target pasting application, the copied content is not returned. In this way, the copied content stored in the clipboard cannot be obtained by the non-target pasting application by using the reading module.

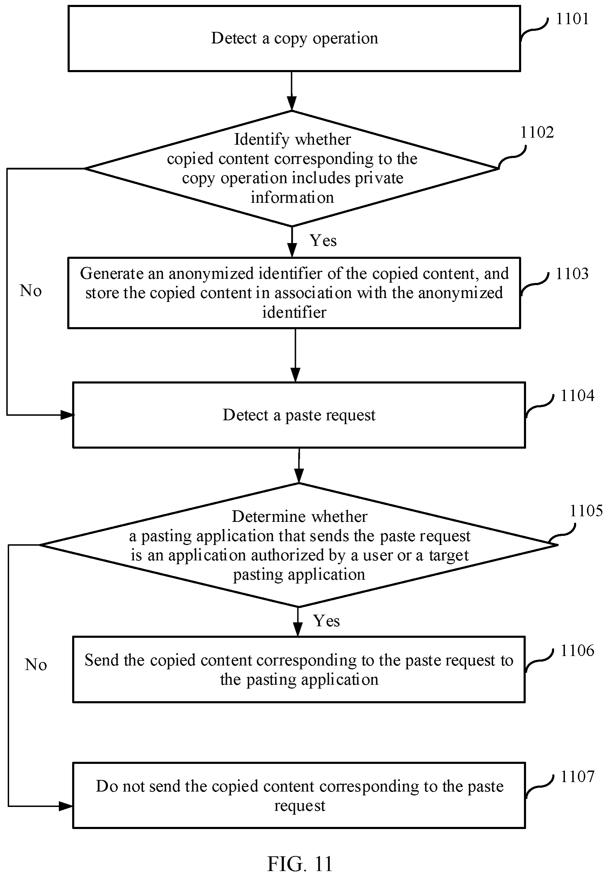

The following describes in detail a data processing method according to an embodiment of this application. The data processing method according to this embodiment of this application is applied to an electronic device. FIG. 11 is a diagram of the data processing method according to this embodiment of this application. The data processing method includes the following steps.

1101: Detect a copy operation.

In this embodiment of this application, the copy operation detected by a clipboard may be a copy operation of selecting, by a user on a touchscreen of the electronic device, content to be copied, a copy operation initiated through a voice, a copy operation initiated through a cursor (for example, a mouse), a copy operation initiated through a gesture, a copy operation controlled through a button, or the like.

1102: Identify whether copied content corresponding to the copy operation includes private information. If a determining result is positive, go to 1103: generating an anonymized identifier of the copied content, and storing the copied content in association with the anonymized identifier; or if a determining result is negative, go to 1104: detecting a paste request.

In this embodiment of this application, a writing module of the clipboard obtains the copied content corresponding to the copy operation, and stores the copied content in a storage module of the clipboard. The storage module sends the obtained copied content to an identification module, so that the identification module identifies whether the copied content includes the private information (namely, a sensitive keyword), for example, information such as an identity card number, a bank card number, a bank card password, or a salary.

1103: Generate the anonymized identifier of the copied content, and store the copied content in association with the anonymized identifier.

In this embodiment of this application, if the identification module identifies the private information (namely, the sensitive keyword) in the copied content, the copied content is divided, and then divided copied content is sent to an anonymization module. The anonymization module anonymizes the divided copied content, generates a corresponding anonymized identifier, and then stores the content in association with the anonymized identifier to the storage module.

For example, when it is identified that the copied content includes the private information, for example, when the information such as the identity card number or the bank card number of the user is identified, an anonymized identifier corresponding to the private information in the copied content is generated, and the copied content is stored in association with the anonymized identifier.

For example, if it is identified that the copied content includes the identity card number of the user, an anonymized identifier "identity card number" is generated, and the copied content is stored in association with the "identity card number", so that the identity card number of the user is returned in a timely manner when a request for pasting the identity card number of the user is received.

In some embodiments, when it is identified that the copied content is one or more segments of text, and the copied content includes a plurality of pieces of private information, a corresponding anonymized identifier is generated for each piece of private information in the copied content, and each piece of private information in the copied content is stored in association with the corresponding anonymized identifier.

For example, if it is identified that the copied content includes an identity card number "Bxxxxxxxxxxxxxxxxx" or a field of the copied content includes an identity card number "Bxxxxxxxxxxxxxxxxx", an anonymized identifier "identity card number" is generated; and if it is identified that the copied content further includes a bank card number "Cxxxxxxxxxxxxxxx" or a field of the copied content further includes a bank card number "Cxxxxxxxxxxxxxxx", an anonymized identifier "bank card number" is generated. The identity card number "Bxxxxxxxxxxxxxxxxx" is stored in association with the "identity card number", and the bank card number "Cxxxxxxxxxxxxxxx" is stored in association with the "bank card number".

In some embodiments, when it is identified that the copied content is one or more segments of text, and the copied content includes a plurality of pieces of private information, a corresponding anonymized identifier is generated for each piece of private information in the copied content, and a general anonymized identifier is generated for the copied content. The copied content is stored in association with the general anonymized identifier, and each piece of private information in the copied content is stored in association with the corresponding anonymized identifier.

For example, if it is identified that the copied content includes an identity card number "Bxxxxxxxxxxxxxxxxx" or a field of the copied content includes an identity card number "Bxxxxxxxxxxxxxxxxx", an anonymized identifier "identity card number" is generated; and if it is identified that the copied content further includes a bank card number "Cxxxxxxxxxxxxxxx" or a field of the copied content includes a bank card number "Cxxxxxxxxxxxxxxx", an anonymized identifier "bank card number" is generated, and a general anonymized identifier "PII" is generated for the copied content. The identity card number "Bxxxxxxxxxxxxxxxxx" is stored in association with the "identity card number", the bank card number "Cxxxxxxxxxxxxxxx" is stored in association with the "bank card number", and the copied content is stored in association with the "PII".

In this embodiment of this application, when it is identified that the copied content written into the clipboard includes the private information, the anonymized identifier corresponding to the private information included in the copied content is generated, and the copied content is stored in association with the anonymized identifier, so that the copied content has controlled pasting protection.

1104: Detect a paste request.

In this embodiment of this application, the paste request detected by the clipboard may include a paste request initiated by a target pasting application when the target pasting application detects a paste operation initiated by the user. The paste operation may be a paste operation of selecting, by the user on the touchscreen of the electronic device, content to be pasted, a paste operation initiated through a voice, a paste operation initiated through a cursor (for example, a mouse), a paste operation initiated through a gesture, a paste operation controlled through a button, or the like.

In this embodiment of this application, when the user initiates a paste operation on an application interface of the electronic device, the user may select the anonymized identifier in the application interface of the electronic device, to paste the copied content corresponding to the anonymized identifier. The anonymized identifier may be represented in a form of metadata, a data type, a copy sequence number, an anonymized mask, an identifier, or the like in a single or combined manner.

The following describe a method for pasting the identity card number of the user by using an example in which the copied data stored in the clipboard has one anonymized identifier, for example, the copied data is the identity card number "Bxxxxxxxxxxxxxxxxx", and the anonymized identifier is the "identity card number".

For example, as shown in FIG. 8, when the user taps the text box 402 of the browser application interface 103, the browser application interface 103 displays the option 403 of searching for an identity card number that is generated by the browser application and the option 404 of tapping to paste the identity card number that is generated by the clipboard. The user may paste the "Bxxxxxxxxxxxxxxxxx" stored in the clipboard into the text box 402 by tapping the option 403 of searching for an identity card number or the option 404 of tapping to paste the identity card number.

The following uses an example in which the copied data stored in the clipboard has a plurality of content identifiers and the pasting application is the target pasting application, to describe a method for determining that the pasting application is a pasting application to which the copied data corresponding to the paste request that is sent in response to the paste operation performed by the user is sent.

For example, the copied data stored in the clipboard is a segment of text, the copied data includes a name, an identity card number, a mobile phone number, an email address, and the like of the user, and an anonymized identifier corresponding to text content includes the name, the identity card number, the mobile phone number, the email address, and the like. As shown in FIG. 9a, after the user taps a text box 161 corresponding to a certificate number * on an information filling page 160 of a mobile phone, and initiates a paste operation (for example, touching and holding the text box 161), the information filling page 160 of the mobile phone may display an option 162 of selecting for pasting for the user to select content to be pasted. After the user taps an identity card number option 163, the identity card number stored in the clipboard is written into the text box 161 corresponding to the certificate number *.

For example, the copied data stored in the clipboard is a segment of text, the copied data includes a name, a mobile phone number, an address, a company name, and the like of the user, and an anonymized identifier corresponding to the text content includes the name, the mobile phone number, the address, the company name, and the like. As shown in FIG. 9b, after the user taps a text box 171 corresponding to a detailed address on an express delivery information filling page 170 of a mobile phone, and initiates a paste operation (for example, touching and holding the text box 171), the express delivery information filling page 170 of the mobile phone may display an option 172 of selecting for pasting. After the user taps an address option 173, the address stored in the clipboard is written into the text box 171 corresponding to the detailed address.

In this embodiment of this application, the paste request detected by the clipboard may be sent by the target pasting application, namely, an application that is authorized by the user to access the copied content, or an application that detects a paste operation performed by the user; or may be sent by a non-target pasting application, namely, an application that is not authorized by the user, does not detect a paste operation performed by the user, but requests to access the copied content.

A manner in which the user authorizes the application to access the copied content may include: authorizing, by the user on a clipboard setting interface (or a system setting interface), the application A to access the copied content. When receiving the user authorization that the application A can access the copied content, a configuration module of the clipboard stores the access permission of the application A.

1105: Determine whether the pasting application that sends the paste request is an application authorized by the user or a target pasting application. If a determining result is positive, go to 1106: sending the copied content corresponding to the paste request to the pasting application; or if a determining result is negative, go to 1107: not sending the copied content corresponding to the paste request.

In some embodiments, when the clipboard obtains the paste request, if the pasting application is neither the application authorized by the user nor the target pasting application, it is determined whether the copied content in the paste request includes the private information of the user, for example, personal information of the user. If the copied content corresponding to the paste request includes the private information of the user, for example, the information such as the identity card number or the bank card number of the user, go to step 1107: not sending the copied content corresponding to the paste request. If it is determined that the copied content corresponding to the paste request does not include the private information of the user, go to step 1106: sending the copied content corresponding to the paste request to the pasting application.

1106: Send the copied content corresponding to the paste request to the pasting application.

1107: Do not send the copied content corresponding to the paste request.

In some embodiments, after the copied content is pasted into the text box corresponding to the paste request, the user may tap the immediate delete option, to delete the corresponding copied content stored in the clipboard.

For example, as shown in FIG. 7, after the copied content "Bxxxxxxxxxxxxxxxxx" is pasted into a text box 403, a browser interface 102 displays an option 404 indicating whether to delete immediately. After receiving a tap of the user on a Yes option 405, the "Bxxxxxxxxxxxxxxxxx" stored in the clipboard is deleted.

In some embodiments, when time at which the copied content is pasted into the text box corresponding to the paste request meets a time threshold, the corresponding copied content stored in the clipboard is deleted.

In this embodiment of this application, only the application initiated by the user or authorized by the user can obtain the copied content, to avoid a problem that the copied content is leaked because the application that is not authorized by the user or the application that does not detect the paste request initiated by the user obtains the copied content.

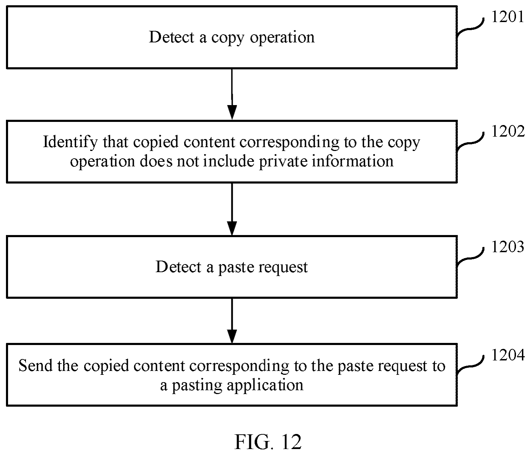

The following describes in detail a data processing method according to an embodiment of this application. A difference from the embodiment shown in FIG. 11 lies in that the data processing method according to this embodiment of this application describes a processing method in which copied content does not include private information. FIG. 12 is a diagram of the data processing method according to this embodiment of this application. The data processing method includes the following steps.

1201: Detect a copy operation.

In this embodiment of this application, the copy operation detected by a clipboard may be a copy operation of selecting, by a user on a touchscreen of an electronic device, content to be copied, a copy operation initiated through a voice, a copy operation initiated through a cursor (for example, a mouse), a copy operation initiated through a gesture, a copy operation controlled through a button, or the like.

1202: Identify that copied content corresponding to the copy operation does not include private information.

For example, the copied content is as follows: The four fires of the heat treatment are annealing, normalizing, quenching, and tempering. An identification module identifies that the copied content does not include the private information. Therefore, an anonymization module does not generate an anonymized identifier of the copied content, that is, the copied content does not have the anonymized identifier.

It may be understood that when it is identified that the copied content corresponding to the copy operation includes the private information, steps 1103 to 1107 are performed. Details are not described herein again.

1203: Detect a paste request.

In this embodiment of this application, the paste request detected by the clipboard may include a paste request sent by a target pasting application when the target pasting application detects a paste operation initiated by the user. The paste operation may be a paste operation of selecting, by the user on the touchscreen of the electronic device, content to be pasted, a paste operation initiated through a voice, a paste operation initiated through a cursor (for example, a mouse), a paste operation initiated through a gesture, a paste operation controlled through a button, or the like. The paste request may alternatively be sent by a non-target pasting application.

It may be understood that the copied content requested to be read by the paste request is the latest copied content stored in the clipboard, to be specific, the four fires of the heat treatment are annealing, normalizing, quenching, and tempering. The copied content does not have the anonymized identifier. Therefore, the anonymized identifier is not displayed on a pasting application interface.

1204: Send the copied content corresponding to the paste request to a pasting application.

In this embodiment of this application, because the copied content corresponding to the paste request does not include the private information, for example, does not include personal information of the user, regardless of whether the paste request is an application authorized by the user or the target pasting application corresponding to the paste operation performed by the user, the copied content corresponding to the paste request is returned to the pasting application. In this way, security of the copied content is ensured, and application smoothness is ensured.

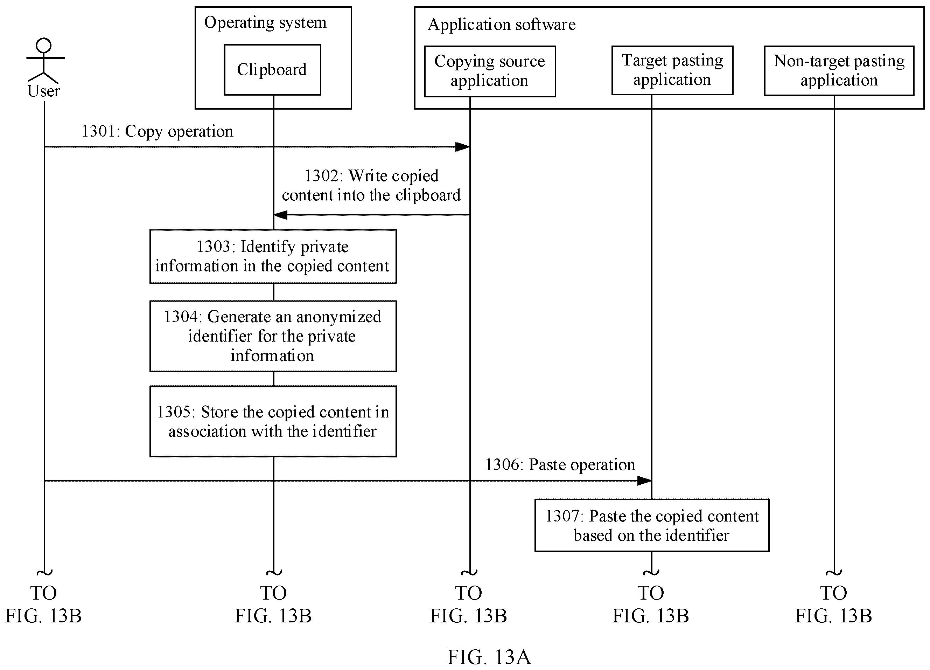

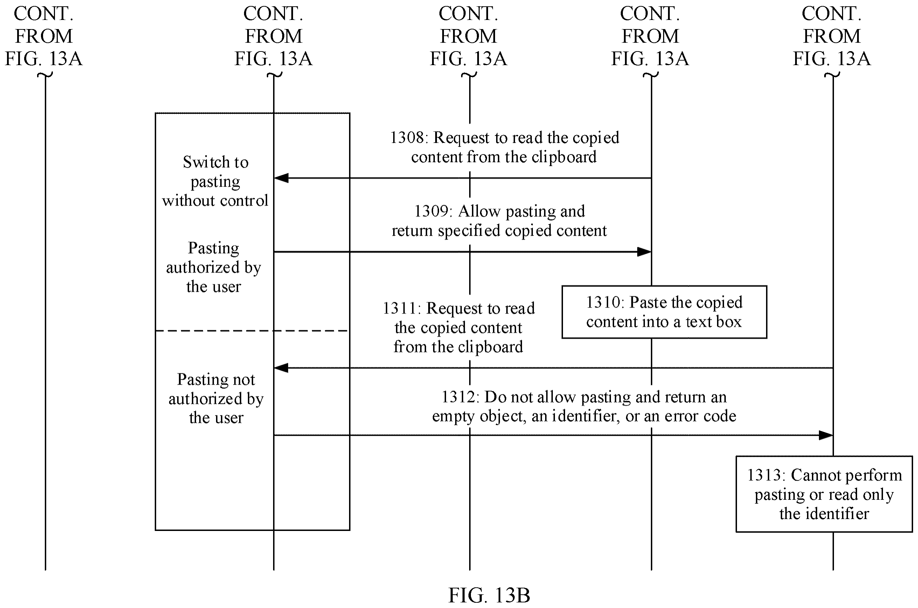

The following describes in detail a data processing method according to an embodiment of this application. The data processing method according to this embodiment of this application is applied to an electronic device. The following uses a mobile phone as an example for description. FIG. 13A and FIG. 13B are an interaction diagram of a data processing method according to an embodiment of this application. The data processing method includes the following steps.

1301: A user initiates a copy operation to a copying source application.

It may be understood that the copying source application may be any application that can use a clipboard in application software, for example, a memo application, a chat application, a conference application, a shopping application, or a music application.

In this embodiment of this application, the copy operation initiated by the user may be a copy operation of selecting, by the user on a touchscreen of the electronic device, content to be copied, a copy operation initiated through a voice, a copy operation initiated through a cursor (for example, a mouse), a copy operation initiated through a gesture, a copy operation controlled through a button, or the like.

1302: The copying source application writes copied content into the clipboard.

For example, the copying source application is the memo application. The memo application writes the copied content (for example, an identity card number "Bxxxxxxxxxxxxxxxxx") into the clipboard.

1303: The clipboard identifies private information in the copied content.

It may be understood that the private information may be personal information of the user, for example, information such as an identity card number, a bank card number, a bank card password, and a salary.

1304: The clipboard generates an anonymized identifier for the private information.

For example, in response to that the copied content being the identity card number "Bxxxxxxxxxxxxxxxxx", when the clipboard identifies that the copied content includes the private information, the anonymized identifier of the copied content is generated, for example, an anonymized identifier "identity card number" is generated.

1305: The clipboard stores the copied content in association with the identifier.

For example, the clipboard stores the copied content "Bxxxxxxxxxxxxxxxxx" in association with the anonymized identifier "identity card number".

1306: The user initiates a paste operation to a target pasting application.

In embodiments of this application, the paste operation initiated by the user may be a paste operation of selecting, by the user on the touchscreen of the electronic device, content to be pasted, a paste operation initiated through a voice, a paste operation initiated through a cursor (for example, a mouse), a paste operation initiated through a gesture, a paste operation controlled through a button, or the like.

For example, the user initiates the paste operation in a search bar of a browser application, to paste the copied content in the clipboard.

1307: The target pasting application pastes the copied content based on the identifier.

It may be understood that, that the target pasting application pastes the copied content based on the identifier is equivalent to that the target pasting application detects the paste operation initiated by the user or detects the anonymized identifier selected by the user.

1308: The target pasting application requests the clipboard to read the copied content from the clipboard.

It may be understood that, when the target pasting application obtains the paste operation initiated by the user, the target pasting application requests the clipboard to read, from the clipboard, the copied content corresponding to the paste operation initiated by the user.

1309: The clipboard allows pasting and returns specified copied content to the target pasting application.

It may be understood that, because the paste operation is initiated by the user, the clipboard allows pasting and returns the requested copied content to the target pasting application.

1310: The target pasting application pastes the copied content into a text box.

1311: A non-target pasting application requests the clipboard to read the copied content from the clipboard.

In some embodiments, when the non-target pasting application identifies that the clipboard includes the copied content, the non-target pasting application requests the clipboard to read the copied content from the clipboard.

For example, when identifying that the copied content in the clipboard includes height and weight information of the user, the shopping application requests the clipboard to read the copied content from the clipboard.

1312: The clipboard does not allow pasting and returns null, an identifier, or an error code to the non-target pasting application.

For example, the clipboard returns, to the non-target pasting application, null or the anonymized identifier "identity card number" or "pasting failure".

1313: The non-target pasting application cannot perform pasting or can only read the identifier.

In some embodiments, when the copied content that the non-target pasting application requests to paste includes the private information, the non-target pasting application cannot obtain the copied content that the non-target pasting application requests to paste, and can obtain only null, the anonymized identifier, or the error code. When the copied content that the non-target pasting application requests to does not include the private information, the copied content that the non-target pasting application requests to paste is returned. In this way, security of the copied content is ensured, and application smoothness is ensured.

In this embodiment of this application, when obtaining the copied content, the clipboard first identifies, anonymizes, and identifies the copied content, and then stores the copied content in an associated manner. When receiving the paste request, the clipboard restricts access to the copied content based on the copied content accessed by the paste request and a type of an initiator of the paste request, so that only an application that detects the paste operation performed by the user or an application authorized by the user can obtain the copied content.

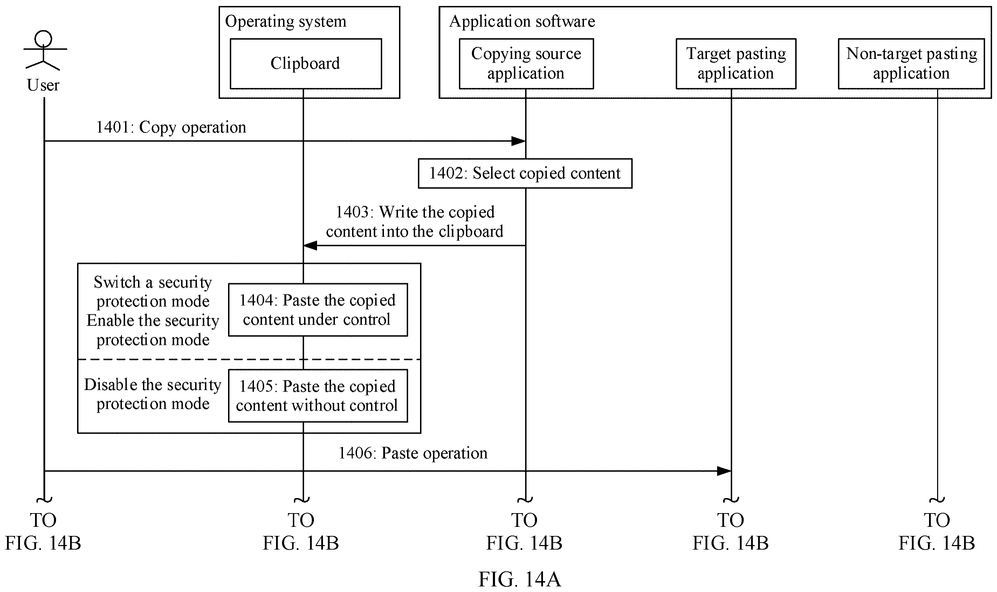

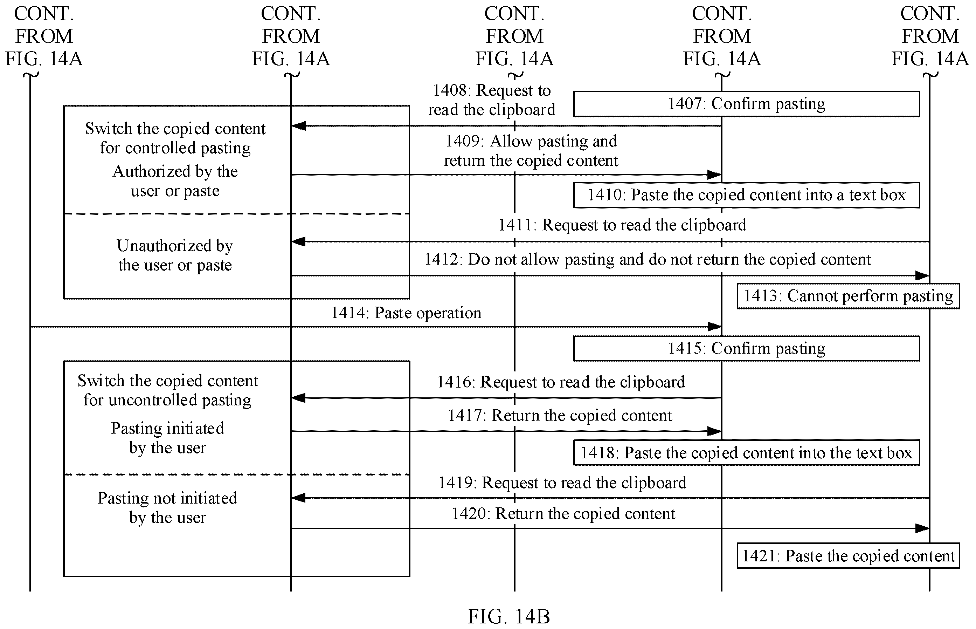

The following describes in detail a data processing method according to an embodiment of this application. A difference from the embodiment shown in FIG. 13A and FIG. 13B lies in that the data processing method according to this embodiment of this application describes a data processing method in which a security protection mode is enabled and a security protection mode is disabled for a clipboard. FIG. 14A and FIG. 14B are an interaction diagram of the data processing method according to this embodiment of this application. The data processing method includes the following steps.

1401: A user initiates a copy operation to a copying source application.

For the method for initiating the copy operation by the user to the copying source application, refer to step 1301 in the embodiment shown in FIG. 13A and FIG. 13B. Details are not described herein again.

1402: The copying source application selects copied content.

It may be understood that the copying source application may select corresponding copied content in response to the copy operation of the user.

1403: The copying source application writes the copied content into the clipboard.

For the method for writing the copied content into the clipboard by the copying source application, refer to step 1302 in the embodiment shown in FIG. 13A and FIG. 13B. Details are not described herein again.

Based on steps 1404 and 1405, the following describes a method for switching (alt) the security protection mode.

1404: Paste the copied content in the clipboard under control.

It may be understood that, when the security protection mode is enabled, the copied content stored in the clipboard is pasted under control. To be specific, when it is identified that the copied content includes the private information, only the target pasting application that detects a paste operation initiated by the user or the application authorized by the user can obtain the copied content corresponding to the paste operation.

The user may customize whether to enable the security protection mode, for example, set whether to enable the security protection mode in a setting application of a system.

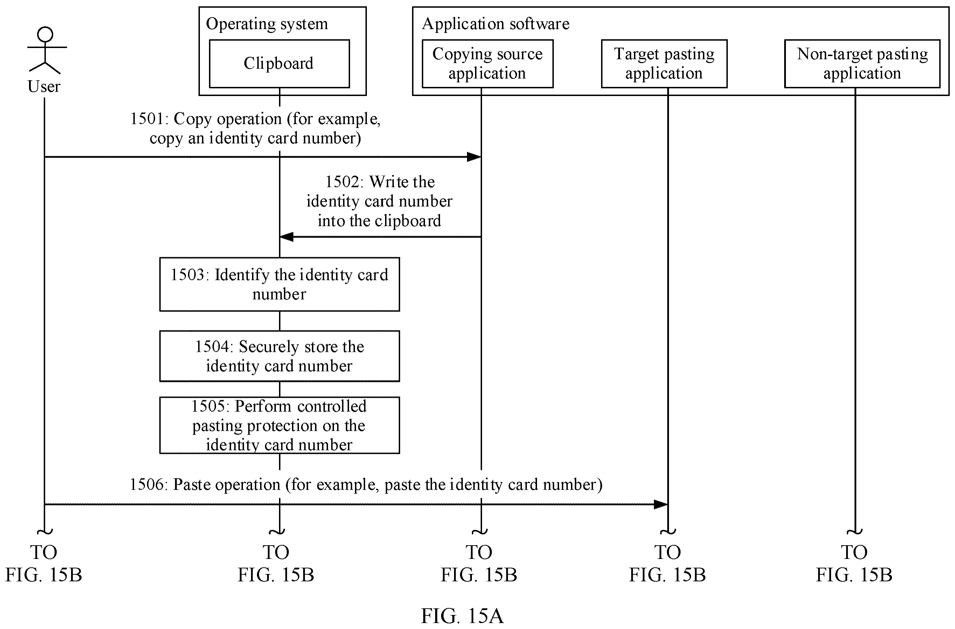

For example, when the security protection mode is enabled, after the user copies data, for example, copies data such as a segment of text, including personal information of the user, of an identity card, a bank card, or an address, and the clipboard identifies that the copied content includes the private information (namely, the personal information of the user), the copied content is pasted under control, in other words, the application is allowed to access and paste the copied data only after being authorized or confirmed by the user. In a controlled pasting processing process, the copied content is detected, anonymized, identified, and then stored, and access to the copied content is strictly controlled, for example, only the user can trigger pasting. A method for detecting, anonymizing, identifying, and storing the copied content is described in embodiments shown in FIG. 15A to FIG. 19B, and details are not described herein again.

1405: Paste the copied content in the clipboard without control.

It may be understood that, when the security protection mode is disabled, the copied content stored in the clipboard is pasted without control. To be specific, when the target pasting application or the non-target pasting application requests the clipboard to read the copied content stored in the clipboard, the copied content is returned regardless of whether the copied content includes the private information.

1406: The user initiates the paste operation to the target pasting application.

For a method for initiating, by the user, the paste operation to the target pasting application, refer to step 1306 in the embodiment shown in FIG. 13A and FIG. 13B. Details are not described herein again.

Based on steps 1407 to 1413, the following describes a data processing method when the clipboard is switched to paste the copied content under control, in other words, the clipboard enables the security protection mode.

1407: The target pasting application confirms pasting.

It may be understood that, that the target pasting application confirms pasting is equivalent to that the target pasting application receives the paste operation initiated by the user or detects the anonymized identifier selected by the user.

1408: The target pasting application requests the clipboard to read the clipboard.

It may be understood that, when detecting the paste operation initiated by the user, the target pasting application requests the clipboard to read the copied content corresponding to the paste operation from the clipboard.

1409: The clipboard allows pasting and returns the copied content to the target pasting application.

It may be understood that, because the paste operation is initiated by the user, the clipboard allows pasting and returns, to the target pasting application, the copied content requested by the target pasting application.

1410: The target pasting application pastes the copied content into a text box.

1411: The non-target pasting application sends, to the clipboard, a request for reading the clipboard.

In some embodiments, when the non-target pasting application identifies that the copied content exists in the clipboard, the non-target pasting application requests the clipboard to read the copied content from the clipboard.

For example, when identifying that the copied content exists in the clipboard, for example, when the copied content includes salary information of the user, a wealth management application requests the clipboard to read the copied content from the clipboard.

1412: The clipboard sends, to the non-target pasting application, pasting unallowed, and does not return the copied content.

For example, the clipboard returns, to the non-target pasting application, pasting unallowed and an anonymized identifier "identity card number" or "pasting failure".

1413: The non-target pasting application cannot perform pasting.

1414: The user initiates a paste operation.

Based on steps 1415 to 1421, the following describes a pasting method when the clipboard is switched to paste the copied content without control, in other words, the clipboard disables the security protection mode.

1415: The target pasting application confirms pasting.

1416: The target pasting application requests the clipboard to read the clipboard.

1417: The clipboard returns the copied content to the target pasting application.

It may be understood that, when the security protection mode is disabled, the copied content stored in the clipboard is pasted without control. To be specific, when the target pasting application requests the clipboard to read the copied content stored in the clipboard, the copied content is returned regardless of whether the copied content includes the private information.

1418: The target pasting application pastes the copied content into the text box.

1419: The non-target pasting application sends a request to the clipboard to read the clipboard.

1420: The clipboard returns the copied content to the non-target pasting application.

It may be understood that, when the security protection mode is disabled, the copied content stored in the clipboard is pasted without control. To be specific, when the non-target pasting application requests the clipboard to read the copied content stored in the clipboard, the copied content is returned regardless of whether the copied content includes the private information.

1421: The non-target pasting application pastes the copied content.

In this embodiment of this application, when obtaining the copied content, the clipboard determines, based on whether the security protection mode is enabled, whether the copied content is pasted under control. When the security protection mode is enabled, the copied content stored in the clipboard is pasted under control, and the clipboard restricts access to the copied content based on the copied content accessed by the paste request and the type of the pasting application, so that only an application that detects a paste operation performed by the user or that is authorized by the user can obtain the copied content. When the security protection mode is disabled, the copied content stored in the clipboard is pasted without control. To be specific, when the pasting application (for example, the target pasting application or the non-target pasting application) requests the clipboard to read the copied content stored in the clipboard, the copied content is sent to the pasting application regardless of whether the copied content includes the private information.

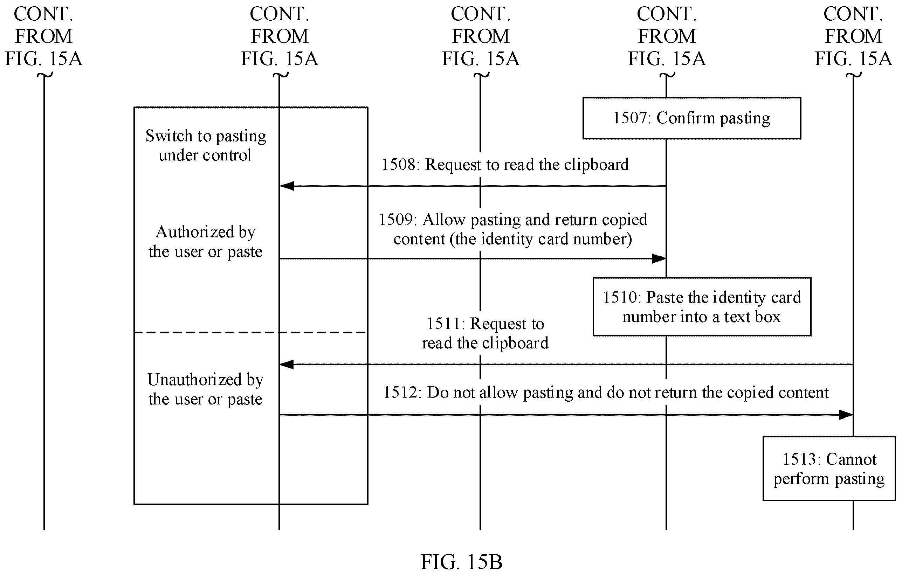

The following uses an example in which the electronic device is a mobile phone and the copied content is an identity card number to describe in detail a data processing method when the copied content is pasted under control in the embodiment shown in FIG. 14A and FIG. 14B. FIG. 15A and FIG. 15B are an interaction diagram of a corresponding data processing method. The data processing method includes the following steps.

1501: A user initiates a copy operation (for example, copying the identity card number).

For example, the user copies the identity card number "Bxxxxxxxxxxxxxxxxx" in a copying source application (for example, a chat application) of the mobile phone.

1502: The copying source application writes the identity card number into a clipboard.

For example, the copying source application (for example, the chat application) writes the identity card number "Bxxxxxxxxxxxxxxxxx" into the clipboard.

1503: The clipboard identifies the identity card number.

It may be understood that, when the security protection mode is enabled for the clipboard, after the clipboard obtains the copied content, for example, the identity card number, the clipboard writes the copied content and an application identifier of the copying source application into a timestamp association record, and identifies whether the copied content includes the private information (namely, personal information of the user), for example, identifies whether the copied content is the identity card number or whether a field of the copied content includes the identity card number. If it is detected that the copied content includes the private information (namely, the personal information of the user), the copied content is securely stored, for example, stored in an encrypted manner.

1504: The clipboard securely stores the identity card number.

1505: Perform controlled pasting protection on the identity card number in the clipboard.

It may be understood that, when the security protection mode is enabled for the clipboard, if it is identified that the copied content includes the private information (namely, the personal information of the user), the copied content is securely stored, and the copied content has controlled pasting protection.

1506: The user initiates a paste operation (for example, pasting the identity card number).

For example, the user starts a target pasting application (for example, a shopping application), and initiates an operation of pasting the identity card number.

Based on steps 1507 to 1510, the following describes a pasting method for switching the clipboard to the copied content that is authorized by the user or pasted.

1507: The target pasting application confirms pasting.

It may be understood that, that the target pasting application confirms pasting is equivalent to that the target pasting application detects the paste operation initiated by the user or detects an anonymized identifier selected by the user.

1508: The target pasting application requests the clipboard to read the clipboard.

It may be understood that, when detecting the paste operation initiated by the user, the target pasting application requests the clipboard to read the copied content corresponding to the paste operation from the clipboard.

1509: The clipboard allows pasting and returns the copied content (the identity card number) to the target pasting application.

It may be understood that, because the paste operation is initiated by the user, the clipboard allows pasting and returns the identity card number to the target pasting application.

1510: The target pasting application pastes the identity card number to a text box.

Based on steps 1511 to 1513, the following describes a data processing method in which the paste request is not authorized by the user or pasted.

1511: A non-target pasting application sends a request to the clipboard to read the clipboard.

In some embodiments, when the non-target pasting application identifies that the clipboard includes the copied content, the non-target pasting application requests the clipboard to read the copied content from the clipboard.

For example, when identifying that the copied content exists in the clipboard, a wealth management application requests the clipboard to read the copied content from the clipboard.

1512: The clipboard sends, to the non-target pasting application, pasting unallowed, and does not return the copied content.

For example, the clipboard returns, to the non-target pasting application, pasting unallowed and an anonymized identifier "identity card number" or "pasting failure".

1513: The non-target pasting application cannot perform pasting.

In this embodiment of this application, after the user enables the security protection mode, and the clipboard obtains the copied content, the private information (namely, the personal information of the user) in the copied content is identified, and a pasting permission is set. In other words, the private information can be read only by the target pasting application or an application authorized by the user, and the copied content read by the non-target pasting application is the null, to protect security of the copied content and application running smoothness. Therefore, in this embodiment of this application, a case in which the copied content is abused is avoided, a path in which the non-target pasting application steals the private information in the clipboard is cut off, the private information of the user is protected from being leaked to an application or an object that the user does not disclose an intention, and interests of the user are protected.

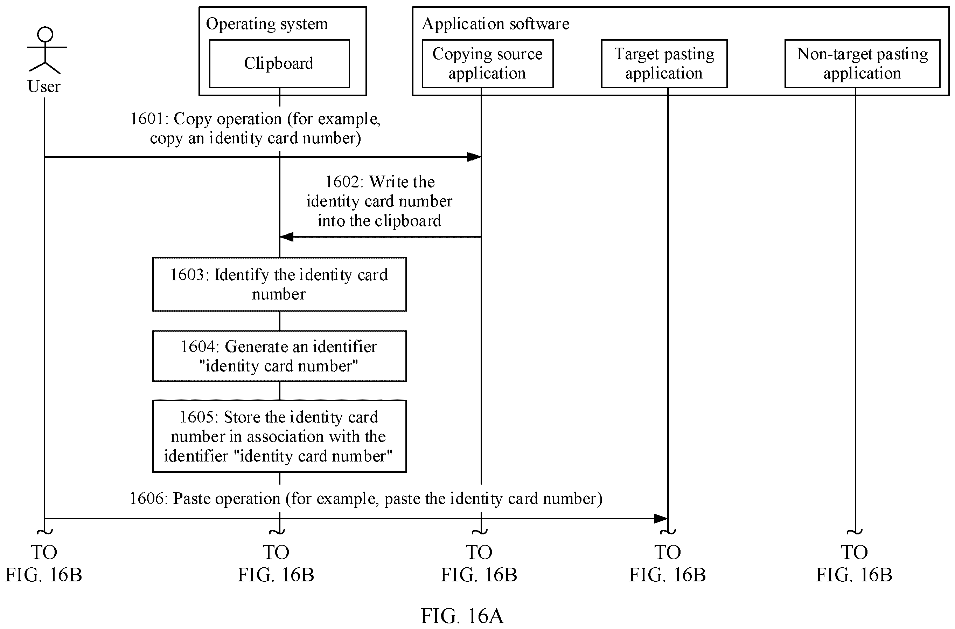

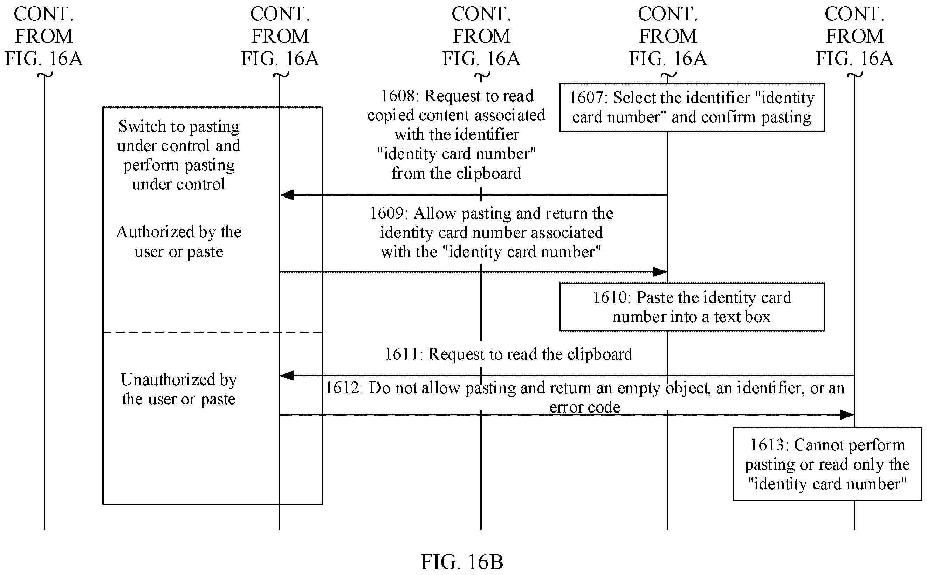

The following uses an example in which the electronic device is a mobile phone and the copied content is an identity card number to describe in detail a method in which the clipboard stores the copied content in association with the identifier in the embodiment shown in FIG. 13A and FIG. 13B. A difference between the embodiment shown in FIG. 16A and FIG. 16B and the embodiment shown in FIG. 15A and FIG. 15B lies in that, in a process of storing the copied content that includes the private information, a corresponding anonymized identifier is generated, and the anonymized identifier and the copied content are stored in association. FIG. 16A and FIG. 16B are a diagram of a data processing method according to an embodiment of this application. The data processing method includes the following steps.

1601: A user initiates a copy operation (for example, copying an identity card number).

For example, the user copies the identity card number "Bxxxxxxxxxxxxxxxxx" in a copying source application (for example, a chat application) of the mobile phone.

1602: The copying source application writes the identity card number into a clipboard.

1603: The clipboard identifies the identity card number.

In this embodiment of this application, when the security protection mode is enabled for the clipboard, after the clipboard obtains the copied content, for example, the identity card number, the clipboard writes the copied content and an application identifier of the copying source application into a timestamp association record, and identifies whether the copied content includes the private information, for example, identifies whether the copied content is the identity card number or whether a field of the copied content includes the identity card number.

1604: The clipboard generates an identifier "identity card number".

In this embodiment of this application, if it is detected that the copied content includes the private information, an anonymized identifier corresponding to the private information is generated.

For example, if the clipboard identifies that the copied content includes the identity card number, the clipboard generates the anonymized identifier "identity card number".

1605: The clipboard stores the identity card number in association with the identifier "identity card number".

In this embodiment of this application, when the clipboard runs the security protection mode, and when it is identified that the copied content written into the clipboard includes the private information (for example, the personal information of a user), the anonymized identifier corresponding to the copied content is generated, and the copied content is stored in association with the corresponding anonymized identifier, so that the copied content has controlled pasting protection.

1606: The user initiates a paste operation (for example, pasting the identity card number).

In this embodiment of this application, when the user starts a target pasting application (for example, a shopping application) and initiates a paste operation, the user may select the anonymized identifier "identity card number" to confirm pasted content, and authorize the target pasting application to request to read the clipboard.

It can be learned that, this embodiment of this application provides explicit protection for privacy visualization, and the user can perceive the private information, operate the private information, and experience the private information.

Based on steps 1607 to 1610, the following describes a method in which the target pasting application pasts the identity card number.

1607: The target pasting application selects the identifier "identity card number" and confirms pasting.

It may be understood that, that the target pasting application selects the identifier "identity card number" and confirms pasting is equivalent to that the target pasting application detects a paste operation that is initiated by the user and that selects the "identity card number" as the anonymized identifier.

1608: The target pasting application requests the clipboard to read the copied content associated with the identifier "identity card number" from the clipboard.

It may be understood that, when the target pasting application obtains the paste operation that is initiated by the user and that selects the "identity card number" as the anonymized identifier, the target pasting application requests the clipboard to read the copied content associated with the identifier "identity card number" from the clipboard.

1609: The clipboard allows pasting and returns the identity card number associated with the identifier "identity card number" to the target pasting application.

It may be understood that, because the paste operation is initiated by the user, the clipboard allows pasting and returns, to the target pasting application, the identity card number associated with the "identity card number".

1610: The target pasting application pastes the identity card number to a text box.

Based on steps 1611 to 1613, the following describes a method in which the non-target pasting application requests the clipboard to read data.

1611: The non-target pasting application sends a request to the clipboard to read the clipboard.

In some embodiments, when the non-target pasting application identifies that the clipboard includes the copied content, the non-target pasting application requests the clipboard to read the copied content from the clipboard.

For example, when identifying that the copied content in the clipboard includes salary information of the user, the shopping application requests the clipboard to read the copied content from the clipboard.

1612: The clipboard sends, to the non-target pasting application, pasting unallowed, and returns null, an identifier, or an error code.

For example, the clipboard returns, to the non-target pasting application, pasting unallowed and "pasting failure" or an anonymized identifier "identity card number".

1613: The non-target pasting application cannot perform pasting or can read only the "identity card number".

Based on the embodiment shown in FIG. 15A and FIG. 15B, in this embodiment of this application, the anonymized identifier is generated based on an identification result of the copied content, and the copied content is associated with the anonymized identifier for secure storage, so that the user can access the corresponding copied content based on a link of the anonymized identifier. In addition, in this embodiment of this application, permission control is implemented on access to the copied content, thereby avoiding leakage of the copied content.

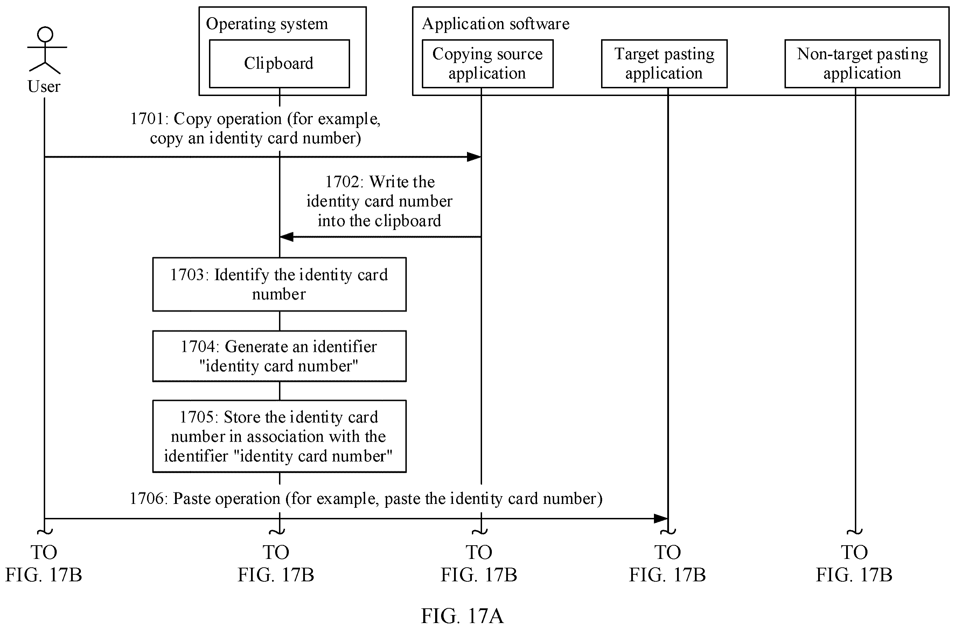

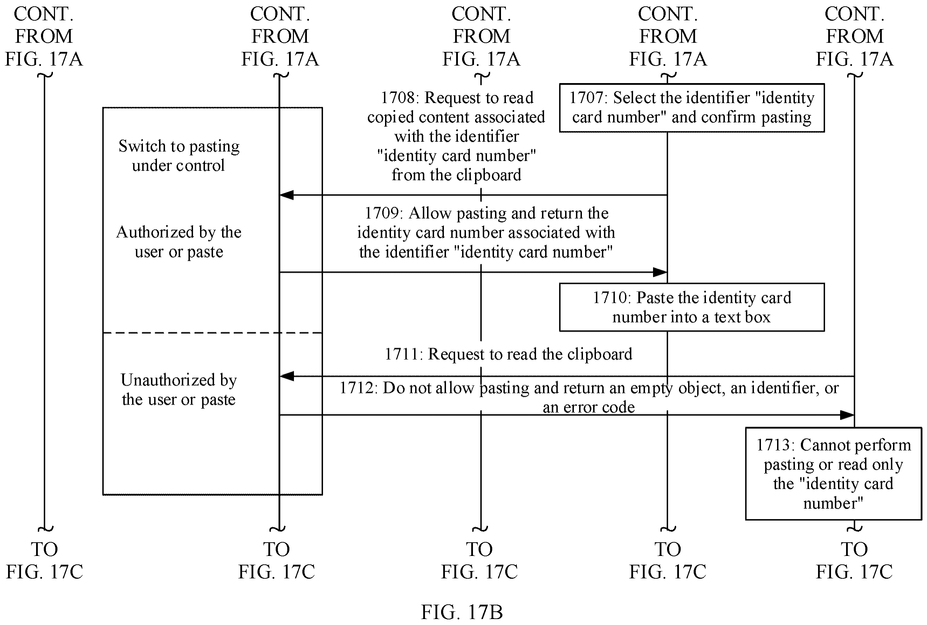

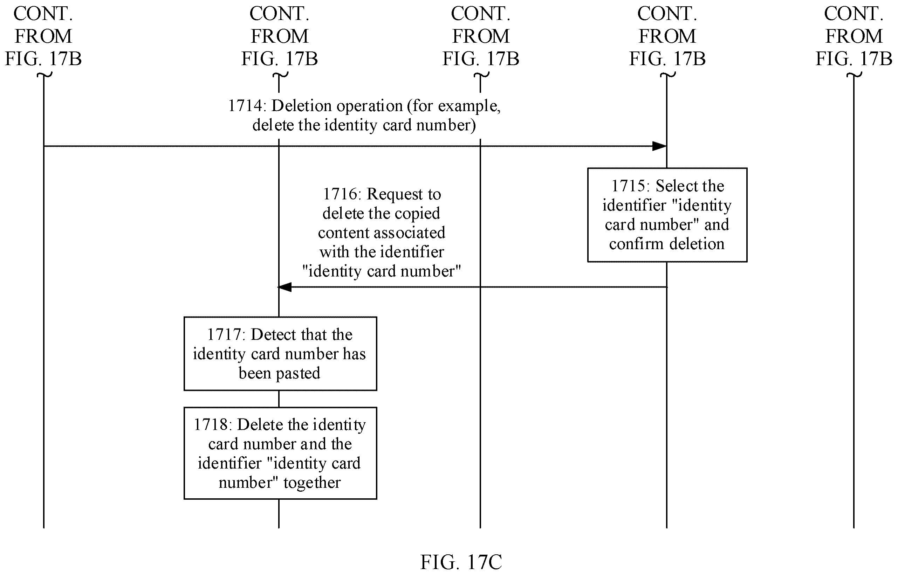

The following describes the data processing method by using an example in which the electronic device is a mobile phone and the copied content is an identity card number. FIG. 17A to FIG. 17C are a diagram of a data processing method according to an embodiment of this application. A difference between the embodiment shown in FIG. 17A to FIG. 17C and the embodiments shown in FIG. 15A and FIG. 15B and FIG. 16A and FIG. 16B lies in that, in this embodiment of this application, when a user performs a deletion operation, copied content and a corresponding anonymized identifier that are stored in a clipboard are immediately deleted. The data processing method shown in FIG. 17A to FIG. 17C includes the following steps.

It may be understood that steps 1701 to 1713 in this embodiment of this application are in one-to-one correspondence with steps 1601 to 1613 in the embodiment shown in FIG. 16A and FIG. 16B. Details are not described herein again.

1701: The user initiates a copy operation (for example, copying the identity card number).

1702: A copying source application writes the identity card number into the clipboard.

1703: The clipboard identifies the identity card number.

1704: The clipboard generates an identifier "identity card number".

1705: The clipboard stores the identity card number in association with the identifier "identity card number".

1706: The user initiates a paste operation (for example, pasting the identity card number).

1707: The target pasting application selects the identifier "identity card number" and confirms pasting.

1708: The target pasting application requests the clipboard to read the copied content associated with the identifier "identity card number" from the clipboard.

1709: The clipboard allows pasting and returns the identity card number associated with the identifier "identity card number" to the target pasting application.

1710: The target pasting application pastes the identity card number to a text box.

1711: A non-target pasting application sends a request to the clipboard to read the clipboard.

1712: The clipboard sends, to the non-target pasting application, pasting unallowed, and returns null, an identifier, or an error code.

1713: The non-target pasting application cannot perform pasting or can read only the "identity card number".

1714: The user initiates a deletion operation (for example, deleting the identity card number).

For example, the user taps to delete the identity card number "Bxxxxxxxxxxxxxxxxx" in the target pasting application (for example, a notepad) of the mobile phone.

1715: The target pasting application selects the identifier "identity card number" and confirms deletion.

That the target pasting application selects the identifier "identity card number" and confirms deletion is equivalent to that the target pasting application detects that the user selects the identifier "identity card number" and confirms deletion.

1716: The target pasting application requests the clipboard to delete the copied content associated with the identifier "identity card number".

1717: The clipboard detects that the identity card number has been pasted.

1718: The clipboard deletes the identity card number and the identifier "identity card number" together.

In some embodiments, when time at which the copied data is pasted into the text box corresponding to the paste request meets a time threshold, the corresponding copied data stored in the clipboard is deleted.

In some embodiments, when storage duration of the copied content in the clipboard meets a time threshold, the copied content is deleted, to reduce system memory and prevent the personal information of the user from being leaked.

In this embodiment of this application, based on the embodiment shown in FIG. 16A and FIG. 16B, a function of immediately deleting the copied content from the clipboard is provided. When detecting that the copied content corresponding to the anonymized identifier corresponding to the deletion operation of the user has been pasted, the clipboard deletes both the copied content corresponding to the anonymized identifier and the anonymized identifier, to avoid a problem that the copied content is leaked because the user forgets to delete the copied content. In this way, the copied content (for example, the personal information of the user) is destroyed immediately after being used, and is not tracked by the non-target pasting application, thereby maintaining interests of the user.

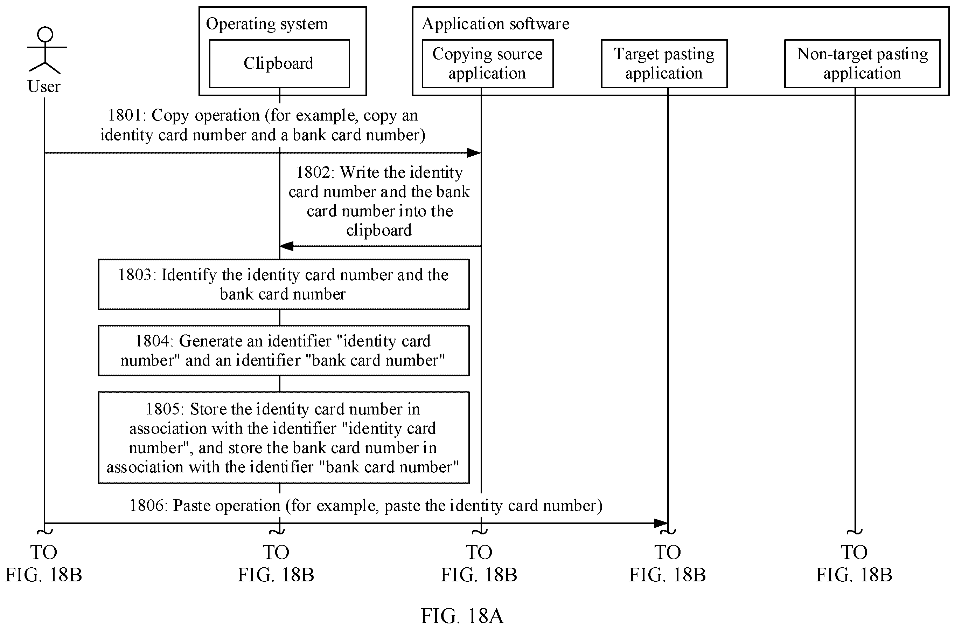

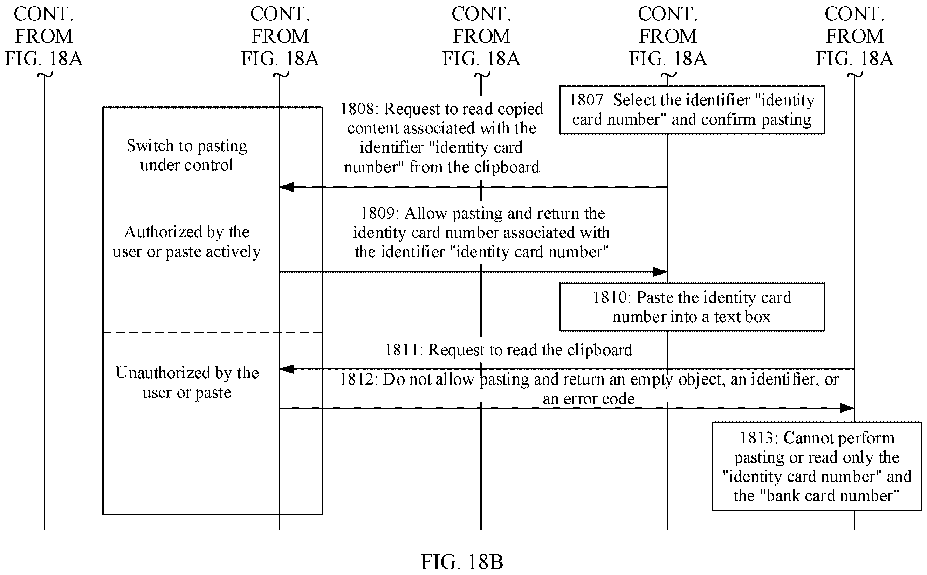

FIG. 18A and FIG. 18B are a diagram of a data processing method according to an embodiment of this application. A difference between the embodiment shown in FIG. 18A and

FIG. 18B and the foregoing embodiments lies in that, in this embodiment of this application, when a security protection mode is enabled for a clipboard, and when it is identified that copied content written into the clipboard includes a plurality of pieces of private information, for example, personal information of a user, a plurality of anonymized identifiers corresponding to the copied content are generated, and the copied content is stored in association with the corresponding anonymized identifiers, so that the copied content has controlled pasting protection. In addition, in this embodiment of this application, selective pasting of the plurality of anonymized identifiers is supported. The data processing method shown in FIG. 18A and FIG. 18B includes the following steps.

1801: The user initiates a copy operation (for example, copying an identity card number and a bank card number).

For example, the user copies an identity card number "Bxxxxxxxxxxxxxxxxx" and a bank card number "Cxxxxxxxxxxxxxxx" in a copying source application (for example, a chat application) of a mobile phone.

1802: The copying source application writes the identity card number and the bank card number into the clipboard.

In this embodiment of this application, when the user initiates the copy operation, the copying source application sequentially writes a plurality of pieces of copied content (such as the identity card number and the bank card number) into the clipboard.

1803: The clipboard identifies the identity card number and the bank card number.

In this embodiment of this application, when the security protection mode is enabled for the clipboard, after the clipboard obtains the copied content, for example, the identity card number and the bank card number, the clipboard writes the copied content and an application identifier of the copying source application into a timestamp association record, and identifies whether the copied content includes the private information, for example, identifies whether the copied content is the identity card number or whether a field of the copied content includes the identity card number; and identifies whether the copied content is the bank card number or whether a field of the copied content includes the bank card number.

1804: The clipboard generates an identifier "identity card number" and an identifier "bank card number".

In this embodiment of this application, if it is detected that the copied content includes the private information, an anonymized identifier corresponding to the private information is generated.

For example, if it is identified that the copied content includes an identity card number "Bxxxxxxxxxxxxxxxxx" or a field of the copied content includes an identity card number "Bxxxxxxxxxxxxxxxxx", an anonymized identifier "identity card number" is generated; and if it is detected that the copied content further includes a bank card number "Cxxxxxxxxxxxxxxx" or a field of the copied content further includes a bank card number "Cxxxxxxxxxxxxxxx", an anonymized identifier "bank card number" is generated. The identity card number "Bxxxxxxxxxxxxxxxxx" is stored in association with the "identity card number", and the bank card number "Cxxxxxxxxxxxxxxx" is stored in association with the "bank card number".

In some embodiments, a first anonymized identifier of the copied content may be associated with the copied content, so that the copied content and each anonymized identifier corresponding to the copied content have controlled pasting protection.

For example, the copied content includes "Bxxxxxxxxxxxxxxxxx" and "Cxxxxxxxxxxxxxxx", and the anonymized identifier corresponding to the copied content includes "identity card number" and "bank card number". The copied content is associated with the "identity card number".

In some embodiments, the copied content may be associated with all anonymized identifiers of the copied content, so that the copied content and each anonymized identifier corresponding to the copied content have controlled pasting protection.

For example, the copied content includes "Bxxxxxxxxxxxxxxxxx and Cxxxxxxxxxxxxxxx", and the anonymized identifiers corresponding to the copied content include "identity card number" and "bank card number". The copied content is associated with the "identity card number" and the "bank card number".

1805: The clipboard stores the identity card number in association with the identifier "identity card number", and stores the bank card number in association with the identifier "bank card number".

In this embodiment of this application, when the clipboard runs the security protection mode, and when it is identified that the copied content written into the clipboard includes the private information (for example, the personal information of a user), the anonymized identifier corresponding to the copied content is generated, and the copied content is stored in association with the corresponding anonymized identifier, so that the copied content has controlled pasting protection.

For example, the clipboard stores the identity card number in association with the identifier "identity card number", and stores the bank card number in association with the identifier "bank card number".

1806: The user initiates a paste operation (for example, pasting the identity card number).

For a method for initiating the paste operation (for example, pasting the identity card number) by the user, refer to step 1606 in the embodiment shown in FIG. 16A and FIG. 16B. Details are not described herein again.

In this embodiment of this application, when the user initiates the paste operation, there are a plurality of optional pasting identifiers (namely, anonymized identifier items), and each pasting identifier is associated with copied content of a corresponding segment. The corresponding copied content may be pasted by selecting a pasting identifier, for example, selecting a pasting identifier "identity card number" to confirm pasting the identity card number, to authorize the target pasting application to request to read the clipboard.

Based on steps 1807 to 1810, the following describes a method in which the target pasting application requests to read the identity card number.

1807: The target pasting application selects the identifier "identity card number" and confirms pasting.

It may be understood that, that the target pasting application selects the identifier "identity card number" and confirms pasting is equivalent to that the target pasting application receives a paste operation that is initiated by the user and that selects the "identity card number" as the anonymized identifier.

1808: The target pasting application requests the clipboard to read the copied content associated with the identifier "identity card number" from the clipboard.

It may be understood that, when the target pasting application obtains the paste operation that is initiated by the user and that selects the "identity card number" as the anonymized identifier, the target pasting application requests the clipboard to read the copied content associated with the identifier "identity card number" from the clipboard.

1809: The clipboard allows pasting and returns the identity card number associated with the identifier "identity card number" to the target pasting application.

It may be understood that, because the paste operation is initiated by the user, the clipboard allows pasting and returns, to the target pasting application, the identity card number associated with the "identity card number".

1810: The target pasting application pastes the identity card number to a text box.

Based on steps 1811 to 1813, the following describes a method in which a non-target pasting application requests to read the clipboard.

1811: The non-target pasting application sends a request to the clipboard to read the clipboard.

In some embodiments, when the non-target pasting application identifies that the clipboard includes the copied content, the non-target pasting application requests the clipboard to read the copied content from the clipboard.

For example, when identifying that the copied content in the clipboard includes salary information of the user, the shopping application requests the clipboard to read the copied content from the clipboard.

1812: The clipboard sends, to the non-target pasting application, pasting unallowed, and returns null, an identifier, or an error code.

For example, the clipboard returns "pasting failure" and the anonymized identifier "identity card number" or null to the non-target pasting application.

1813: The non-target pasting application cannot perform pasting or can read only the "identity card number" and the "bank card number".

Based on the embodiment shown in FIG. 16A and FIG. 16B, in this embodiment of this application, a plurality of pieces of copied content are identified and corresponding anonymized identifiers are generated, and an order of the copied content and an association relationship between the copied content and the anonymized identifiers can be maintained, so that the user can select, from the plurality of pieces of copied content based on a pasting identifier (namely, the anonymized identifier), the copied content that is expected to be pasted, thereby improving user experience. The embodiment shown in FIG. 18A and FIG. 18B adapts to actual application scenarios of copying and pasting, for example, single-type single-field, same-type multi-field optional, multi-type multi-field optional, and multi-copy combination.

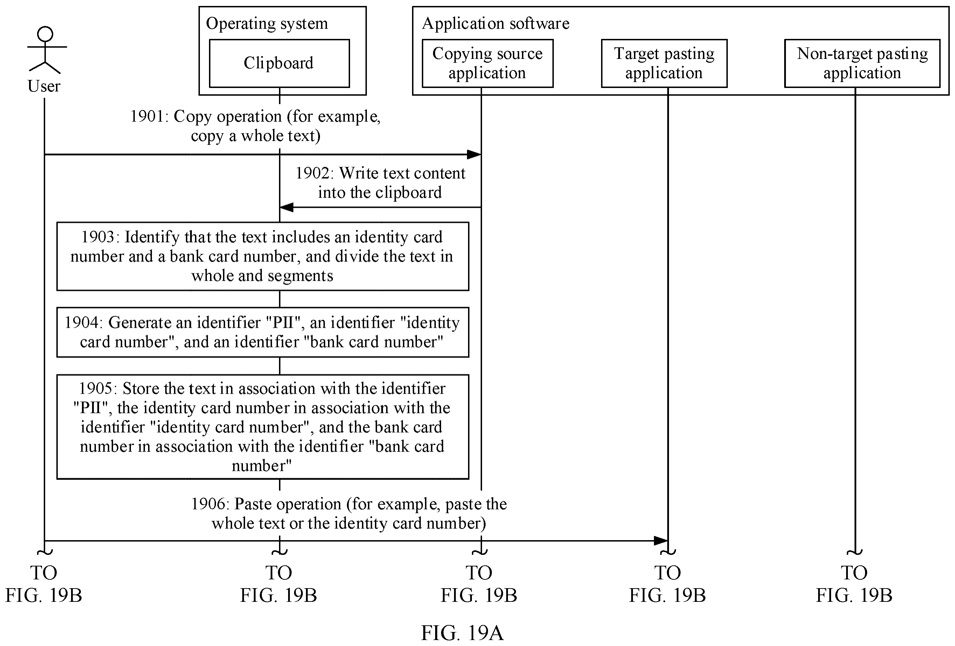

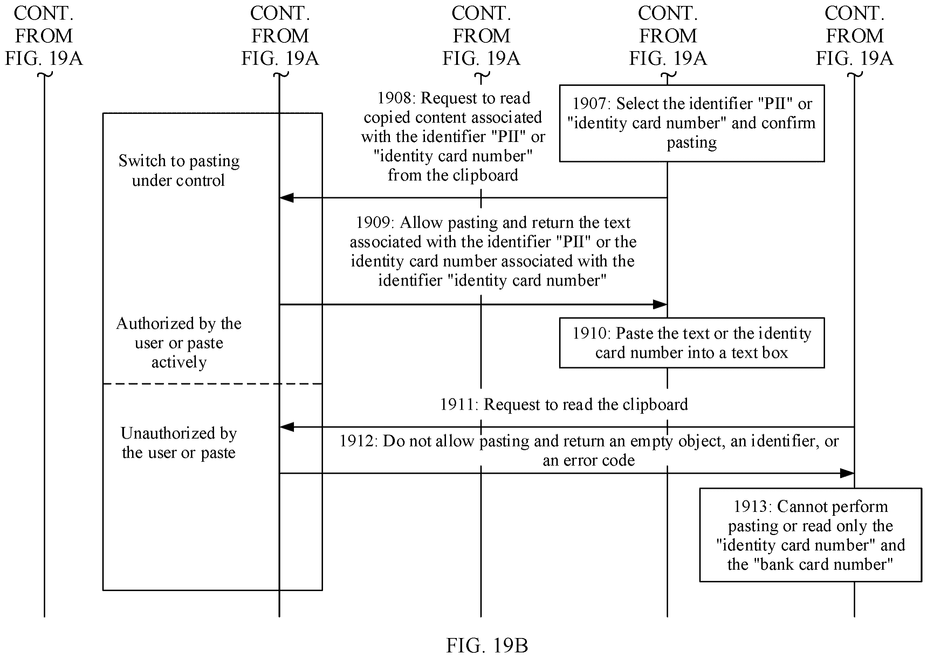

FIG. 19A and FIG. 19B are a diagram of a data processing method according to an embodiment of this application. A difference between the embodiment shown in FIG. 19A and

FIG. 19B and the foregoing embodiments lies in that, when a security protection mode is enabled for a clipboard, and when it is identified that copied content written into the clipboard includes a plurality of pieces of private information, a plurality of anonymized identifiers corresponding to the plurality of pieces of private information included in the copied content are generated, and a general anonymized identifier corresponding to the whole copied content is also generated; and the copied content is stored in association with the anonymized identifiers and the general anonymized identifier. In this way, the copied content has controlled pasting protection, and in this embodiment of this application, the corresponding whole copied content or segmented copied content can be selected and pasted based on the plurality of anonymized identifiers. The data processing method shown in FIG. 19A and FIG. 19B includes the following steps.

1901: The user initiates a copy operation (for example, copying a whole text).

For example, the user copies the whole text in a copying source application (for example, a chat application) of a mobile phone. For example, the user copies, in the chat application of the mobile phone, the whole text including an identity card number "Bxxxxxxxxxxxxxxxxx" and a bank card number "Cxxxxxxxxxxxxxxx".

1902: The copying source application writes text content into the clipboard.

In this embodiment of this application, when the user initiates the copy operation, the copying source application sequentially writes a plurality of pieces of copied content (such as the identity card number and the bank card number) into the clipboard.

1903: The clipboard identifies that the text includes the identity card number and the bank card number, and divides the text in whole and segments.

1904: The clipboard generates an identifier "PII", an identifier "identity card number", and an identifier "bank card number".

It may be understood that the identifier "PII" is a general anonymized identifier corresponding to the text content, the identifier "identity card number" is an anonymized identifier corresponding to the identity card number, and the identifier "bank card number" is an anonymized identifier corresponding to the bank card number.

In this embodiment of this application, when the clipboard obtains the copied content, the clipboard performs private information identification (also referred to as personal information identification) on the copied content, and generates a general anonymized identifier and an anonymized identifier. For example, if it is identified that the copied content includes the private information such as the identity card number or the bank card number, or a plurality of pieces of private information such as the identity card number and the bank card number exist in a field of the copied content, the anonymized identifiers "identity card number" and "bank card number" associated with the identity card number and the bank card number are generated; the identity card number and the "identity card number", and the bank card number and the "bank card number" are automatically fragmented and stored in a security association in the clipboard; and a general anonymized identifier table "PII" is generated and is associated with the whole copied content. In this way, the private information such as the whole copied content, the identity card number, and the bank card number has controlled pasting protection.

1905: The clipboard stores the text in association with the identifier "PII", the identity card number in association with the identifier "identity card number", and the bank card number in association with the identifier "bank card number".

1906: The user initiates a paste operation (for example, pasting the whole text or the identity card number).

In this embodiment of this application, when the user starts a target pasting application (for example, a shopping application) and initiates a paste operation, the user may select the anonymized identifier "PII" or "identity card number" to confirm pasted content, and authorize the target pasting application to request to read the clipboard.

It can be learned that, this embodiment of this application provides explicit protection for privacy visualization, and the user can perceive the private information, operate the private information, and experience the private information.

Based on steps 197 to 1910, the following describes a method in which the target pasting application requests to read the clipboard.

1907: The target pasting application selects the identifier "PII" or "identity card number" and confirms pasting.

It may be understood that, that the target pasting application selects the identifier "PII" or "identity card number" and confirms pasting is equivalent to that the target pasting application detects a paste operation that is initiated by the user and that selects the "PII" or "identity card number" as the identifier.

1908: The target pasting application requests the clipboard to read the copied content associated with the identifier "PII" or "identity card number" from the clipboard.

It may be understood that, when the target pasting application detects the paste operation that is initiated by the user and that selects the "PII" as the identifier, the target pasting application requests to read the copied content associated with the identifier "PII" from the clipboard; and when the target pasting application detects the paste operation that is initiated by the user and that selects the "identity card number" as the identifier, the target pasting application requests to read the copied content associated with the identifier "identity card number" from the clipboard.

1909: The clipboard allows pasting, and returns, to the target pasting application, the text associated with the identifier "PII" or the identity card number associated with the identifier "identity card number".

It may be understood that, because the paste operation is initiated by the user, the clipboard allows pasting and returns, to the target pasting application, the text associated with the identifier "PII" or the identity card number associated with the identifier "identity card number".

It may be understood that when the target pasting application requests to read the copied content associated with the identifier "PII" from the clipboard, the clipboard allows pasting and returns the text associated with the identifier "PII" to the target pasting application. When the target pasting application requests to read the copied content associated with the identifier "identity card number" from the clipboard, the clipboard allows pasting and returns the identity card number associated with the identifier "identity card number" to the target pasting application.

1910: The target pasting application pastes the text or the identity card number into a text box.

In some embodiments, after obtaining the text, the target pasting application may paste corresponding data in the text to a corresponding location based on an identifier in a target pasting application interface.

Based on steps 1911 to 1913, the following describes a method in which a non-target pasting application requests to read the clipboard.

1911: The non-target pasting application sends a request to the clipboard to read the clipboard.

In some embodiments, when the non-target pasting application identifies that the clipboard includes the copied content, the non-target pasting application requests the clipboard to read the copied content from the clipboard.

For example, when identifying that the copied content in the clipboard includes salary information of the user, the shopping application requests the clipboard to read the copied content from the clipboard.

1912: The clipboard sends, to the non-target pasting application, pasting unallowed, and returns null, an identifier, or an error code.

For example, the clipboard returns "pasting failure" and the anonymized identifier "identity card number" or null to the non-target pasting application.

1913: The non-target pasting application cannot perform pasting or can read only the "identity card number" and the "bank card number".

Based on the embodiment shown in FIG. 15A and FIG. 15B, in this embodiment of this application, general identification is added for the copied content, and the general anonymized identifier is generated. In addition, in this embodiment of this application, field identification may be performed on the copied content, so that the user can paste the whole copied content and paste the segmented copied content based on the general anonymized identifier and the anonymized identifier, thereby improving user experience.

In conclusion, based on the foregoing solution of this application, the clipboard performs access control on the paste request of the pasting application, thereby avoiding a phenomenon of abuse of user data. In addition, in a process of pasting the data, the user may paste the copied content to the corresponding text box based on the anonymized identifier, thereby improving user experience.

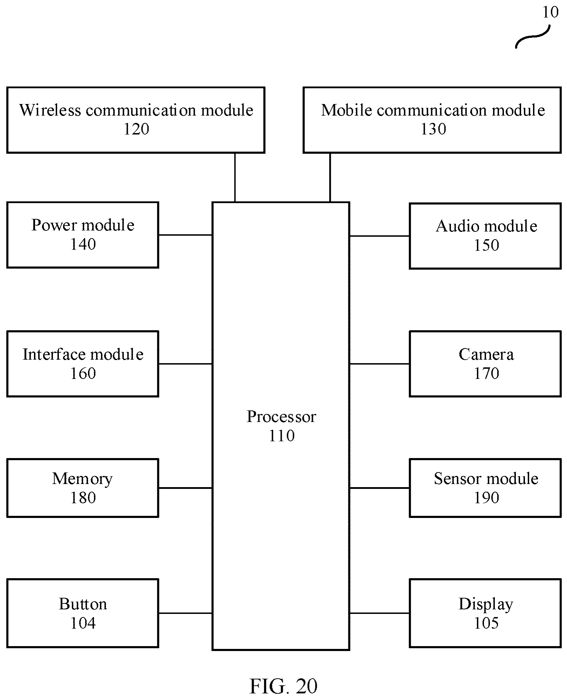

The following describe a hardware structure of each electronic device according to this application by using an electronic device 10 as an example. As shown in FIG. 20, the electronic device 10 may include a processor 110, a power module 140, a memory 180, a mobile communication module 130, a wireless communication module 120, a sensor module 190, an audio module 150, a camera 170, an interface module 160, a button 104, a display 105, and the like.

It may be understood that the structure shown in this embodiment of the present invention constitutes no specific limitation on the electronic device 10. In some other embodiments of this application, the electronic device 10 may include more or fewer components than those shown in the figure, or some components may be combined, or some components may be split, or there may be a different component layout. The components shown in the figure may be implemented by hardware, software, or a combination of software and hardware.

The processor 110 may include one or more processing units, for example, may include a processing module or a processing circuit like a central processing unit (central processing unit, CPU), a graphics processing unit (graphics processing unit, GPU), a digital signal processor (digital signal processor, DSP), a microprocessor (micro-programmed control unit, MCU), an artificial intelligence (artificial intelligence, AI) processor, or a programmable logic device (field programmable gate array, FPGA). Different processing units may be independent devices, or may be integrated into one or more processors. A storage unit may be disposed in the processor 110, and is configured to store instructions and data. In some embodiments, the storage unit in the processor 110 is a cache 180.

It may be understood that the data processing method in embodiments of this application may be performed by a processor 110 of the corresponding electronic device. The power module 140 may include a power supply, a power management component, and the like. The power supply may be a battery. The power management component is configured to manage charging of the power supply and power supplying of the power supply to another module. In some embodiments, the power management component includes a charging management module and a power management module. The charging management module is configured to receive a charging input from a charger. The power management module is configured to connect the power supply, the charging management module, and the processor 110. The power management module receives an input from the power supply and/or the charging management module, and supplies power to the processor 110, the display 105, the camera 170, the wireless communication module 120, and the like.

The mobile communication module 130 may include but is not limited to an antenna, a power amplifier, a filter, a low noise amplifier (low noise amplifier, LNA), and the like. The mobile communication module 130 may provide a wireless communication solution that is applied to the electronic device 10 and that includes 2G, 3G, 4G, 5G, and the like. The mobile communication module 130 may receive an electromagnetic wave through the antenna, perform processing such as filtering or amplification on the received electromagnetic wave, and transmit the electromagnetic wave to a modem processor for demodulation. The mobile communication module 130 may further amplify a signal modulated by the modem processor, and convert the signal into an electromagnetic wave for radiation through the antenna. In some embodiments, at least some functional modules of the mobile communication module 130 may be disposed in the processor 110. In some embodiments, at least some functional modules in the mobile communication module 130 and at least some modules in the processor 110 may be disposed in a same device.

The wireless communication module 120 may include an antenna, and receive and send an electromagnetic wave through the antenna. The wireless communication module 120 may provide a wireless communication solution that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, and the like and that is applied to the electronic device 10. The electronic device 10 can communicate with a network and another device by using wireless communication technologies.

It may be understood that, in embodiments of this application, when the electronic device is a receiving device, the electronic device may receive, by using the wireless communication module, video data and audio data that are from another electronic device in a recording group, and a recorded content label and time stamp information that correspond to each piece of data. In addition, when the electronic device is a sending device, the electronic device may send, by using the wireless communication module, video data and audio data to another electronic device in a recording group, and a recorded content label and time stamp information that correspond to each piece of data.

In some embodiments, the mobile communication module 130 and the wireless communication module 120 that are of the electronic device 10 may alternatively be located in a same module.

The display 105 is configured to display a human-computer interaction interface, an image, a video, and the like. The display 105 includes a display panel. The display panel may use a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a quantum dot light-emitting diode (quantum dot light-emitting diode, QLED), and the like.

The sensor module 190 may include an optical proximity sensor, a pressure sensor, a gyroscope sensor, a barometric pressure sensor, a magnetic sensor, an acceleration sensor, a distance sensor, a fingerprint sensor, a temperature sensor, a touch sensor, an ambient light sensor, a bone conduction sensor, and the like.

The audio module 150 is configured to convert digital audio information into an analog audio signal for output, or convert analog audio input into a digital audio signal. The audio module 150 may be further configured to encode and decode an audio signal. In some embodiments, the audio module 150 may be disposed in the processor 110, or some function modules of the audio module 150 are disposed in the processor 110. In some embodiments, the audio module 150 may include a speaker, an earpiece, a microphone, and a headset interface. The camera 170 is configured to capture a static image or a video. An optical image of an object is generated through the lens, and is projected to the photosensitive element. The photosensitive element converts an optical signal into an electrical signal, and then transmits the electrical signal to an image signal processor (image signal processor, ISP) to convert the electrical signal into a digital image signal. The electronic device 10 can implement an image shooting function through the ISP, the camera 170, the video codec, the graphics processing unit (graphics processing unit, GPU), the display 105, an application processor, and the like.

The interface module 160 includes an external memory interface, a USB interface, a subscriber identity module (subscriber identity module, SIM) card interface, and the like. The external memory interface may be used to connect to an external memory card, for example, a micro SD card, to extend a storage capability of the electronic device 10. The external memory card communicates with the processor 110 through the external memory interface, to implement a data storage function. The universal serial bus interface is configured for communication between the electronic device 10 and another electronic device. The subscriber identity module card interface is configured to communicate with a SIM card installed in the electronic device 10, for example, read a phone number stored in the SIM card, or write a phone number into the SIM card.

In some embodiments, the electronic device 10 further includes the button 104, a motor, an indicator, and the like. The button 104 may include a volume button, a power-on/power-off button, and the like. The motor is configured to enable the electronic device 10 to generate vibration effect, for example, generate vibration when the electronic device 10 of a user is called, to prompt the user to answer a call from the electronic device 10. The indicator may include a laser indicator, a radio frequency indicator, an LED indicator, and the like.

Embodiments of a mechanism disclosed in this application may be implemented in hardware, software, firmware, or a combination of these implementation methods. Embodiments of this application may be implemented as a computer program or program code executed in a programmable system. The programmable system includes at least one processor, a storage system (including a volatile memory, a nonvolatile memory, and/or a storage element), at least one input device, and at least one output device.

The program code may be used to input instructions to perform functions described in this application and generate output information. The output information may be applied to one or more output devices in a known manner. For purposes of this application, a processing system includes any system having a processor, for example, a digital signal processor (digital signal processor, DSP), a microcontroller, an application-specific integrated circuit (application specific integrated circuit, ASIC), or a microprocessor.

The program code may be implemented by using an advanced procedural language or an object-oriented programming language, to communicate with the processing system. The program code can also be implemented in an assembly language or a machine language when needed. The mechanisms described in this application are not limited to the scope of any particular programming language. In any case, the language may be a compiled language or an interpretive language.

In some cases, the disclosed embodiments may be implemented in hardware, firmware, software, or any combination thereof. The disclosed embodiments may also be implemented as instructions carried by or stored on one or more temporary or non-transitory machine-readable (for example, computer-readable) storage media, which may be read and executed by one or more processors. For example, the instructions may be distributed through a network or by another computer-readable medium. Therefore, the machine-readable medium may include any mechanism for storing or transmitting information in a machine (for example, a computer) readable form, including, but not limited to, a floppy disk, a compact disc, an optical disc, a read-only memory (compact disc read-only memory, CD-ROM), a magneto-optical disc, a read-only memory (read-only memory, ROM), a random access memory (random access memory, RAM), an erasable programmable read-only memory (erasable programmable read-only memory, EPROM), an electrically erasable programmable read-only memory (electrically erasable programmable read-only memory, EEPROM), a magnetic or optical card, or a flash memory, or may include a tangible machine-readable memory for transmitting information (for example, a carrier wave, an infrared signal, and a digital signal) through Internet in electrical, optical, acoustic, or other forms. Therefore, the machine-readable medium includes any type of machine-readable medium that is suitable for storing or transmitting electronic instructions or information in a machine (for example, a computer)-readable form.

In the accompanying drawings, some structural or method features may be shown in a particular arrangement and/or order. However, it should be understood that such a particular arrangement and/or order may not be needed. In some embodiments, these features may be arranged in a manner and/or order different from those/that shown in the descriptive accompanying drawings. In addition, inclusion of the structural or method features in a particular figure does not imply that such features are needed in all embodiments, and in some embodiments, these features may not be included or may be combined with other features.

It should be noted that all units/modules mentioned in device embodiments of this application are logical units/modules. Physically, one logical unit/module may be one physical unit/module, may be a part of one physical unit/module, or may be implemented by using a combination of a plurality of physical units/modules. Physical implementations of these logical units/modules are not the most important, and a combination of functions implemented by these logical units/modules is a key to resolve the technical problem provided in this application. In addition, to highlight an innovative part of this application, a unit/module that is not closely related to resolving the technical problem provided in this application is not introduced in the foregoing device embodiments of this application. This does not mean that there are no other units/modules in the foregoing device embodiments.

It should be noted that, in the examples and the specification of the patent, the terms "include" and "have" and any variants thereof are intended to cover a non-exclusive inclusion, so that a process, a method, an article, or a device that includes a list of elements not only includes those elements but also includes other elements that are not expressly listed, or further includes elements inherent to such a process, method, article, or device. An element preceded by "includes a" does not, without more constraints, preclude the existence of additional identical elements in the process, method, article, or device that includes the element. Although this application has been illustrated and described with reference to some preferred embodiments of this application, a person of ordinary skill in the art should understand that various changes may be made to this application in form and detail without departing from the spirit and scope of this application.

## Claims

1. A data processing method, applied to an electronic device, wherein the data processing method comprises:
detecting a copy operation on first data of a first application, and storing the first data;
detecting a paste request of a second application for the first data; and
in response to that the second application meeting a first condition, sending the stored first data to the second application, wherein the first condition comprises that the second application is an application pre-authorized by a user.

2. The data processing method according to claim 1, further comprising:
in response to that the second application not meeting the first condition, skipping sending the stored first data to the second application, wherein the first condition comprises that the second application is an application corresponding to a paste operation of the user.

3. The data processing method according to claim 1, further comprising:
in response to that the second application not meeting the first condition and it is determined that the first data comprises private information, skipping sending the stored first data to the second application.

4. The data processing method according to claim 1, further comprising:
in response to that the second application not meeting the first condition and the first data does not comprise private information, sending the stored first data to the second application.

5. The data processing method according to claim 1, wherein storing the first data comprises:
in response to that it is determined that the first data comprises private information, generating an anonymized identifier of the private information in the first data; and
storing the first data in association with the anonymized identifier of the first data.

6. The data processing method according to claim 5, wherein generating the anonymized identifier of the private information in the first data comprises:
in response to that the first data comprising N1 types of private information, generating N2 anonymized identifiers, wherein N2 is greater than or equal to N1, wherein
if N1 is equal to 1, the N2 anonymized identifiers comprise anonymized identifiers corresponding to the N1 types of private information; or
if N1 is greater than 1, the N2 anonymized identifiers comprise anonymized identifiers corresponding to the N1 types of private information and a general anonymized identifier of the first data.

7. The data processing method according to claim 5, wherein storing the first data in association with the anonymized identifier of the first data comprises:
if N2 is equal to 1, storing the first data in association with the anonymized identifier of the first data; or
if N2 is greater than 1, storing each type of private information in the first data in association with a corresponding anonymized identifier, and storing the first data in association with a general anonymized identifier.

8. The data processing method according to claim 1, comprising:
displaying an anonymized identifier of the first data; and
detecting a selection operation performed by the user on the anonymized identifier of the first data; and
sending the stored first data to the second application comprises:
sending, to the second application, data that corresponds to the anonymized identifier selected through the selection operation and that is in the stored first data.

9. The data processing method according to claim 1, comprising:
in response to that the first data meeting a second condition, deleting the first data and associated storage information of the first data.

10. The data processing method according to claim 9, wherein the second condition comprises at least one of the following:
a delete operation performed by the user on the first data is detected; or
storage time of the first data meets a time threshold.

11. The data processing method according to claim 1, wherein the electronic device comprises a third application, and the third application comprises a writing module, a storage module, a detection module, and a reading module, wherein
the writing module sends the first data to the storage module after the copy operation on the first data of the first application is detected;
the storage module is configured to store the first data;
the detection module is configured to: in response to the paste request, determine whether the second application meets the first condition, obtain the first data from the storage module when the second application meets the first condition, and send the first data to the reading module; and
the reading module is configured to send the first data to the second application.

12. An electronic device, comprising: a memory, configured to store instructions executed by one or more processors of the electronic device; and the processor, which is one of the one or more processors of the electronic device and is configured to perform the data processing method according to any one of claims 1 to 11.

13. A readable medium, wherein the readable medium stores instructions, and when the instructions are executed on an electronic device, the electronic device is enabled to perform the data processing method according to any one of claims 1 to 11.
